(19) Europäisches Patentamt
European Patent Office
Office européen des brevets

(11) EP 4 011 947 B1

(12) FASCICULE DE BREVET EUROPEEN

(45) Date de publication et mention de la délivrance du brevet:
**25.02.2026 Bulletin 2026/09**

(21) Numéro de dépôt: **21213531.3**

(22) Date de dépôt: **09.12.2021**

(51) Classification Internationale des Brevets (IPC):
***C08K 3/30*** (2006.01) ***C08K 3/32*** (2006.01)
***C08K 3/34*** (2006.01) ***H01M 6/18*** (2006.01)
***H01M 10/052*** (2010.01) ***H01M 10/0565*** (2010.01)
***C08L 69/00*** (2006.01) ***H01M 10/0525*** (2010.01)
*C08G 63/64* (2006.01) *C08G 64/30* (2006.01)
*C08G 64/02* (2006.01)

(52) Classification Coopérative des Brevets (CPC):
(C-Sets disponibles)
**H01M 10/0525; C08K 3/30; C08K 3/32; C08K 3/34; H01M 6/181; H01M 10/052; H01M 10/0565;**
C08G 63/64; C08G 64/0208; C08G 64/0216; C08G 64/305; C08K 2003/3045; C08K 2003/324; H01M 2300/0082; Y02E 60/10 (Cont.)

(54) **PRÉPARATION D'UN ÉLECTROLYTE SOLIDE À BASE DE POLYCARBONATES**

HERSTELLUNG EINES FESTEN ELEKTROLYTEN AUF DER BASIS VON POLYCARBONATEN

PREPARATION OF A SOLID ELECTROLYTE MADE OF POLYCARBONATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2020 FR 2012956**

(43) Date de publication de la demande:
**15.06.2022 Bulletin 2022/24**

(73) Titulaires:
- **Commissariat à l'Energie Atomique et aux Energies Alternatives**
  **75015 Paris (FR)**
- **SAFT**
  **92300 Levallois-Perret (FR)**

(72) Inventeurs:
- **NGUYEN, Huu-Dat**
  **38054 Grenoble cedex 09 (FR)**
- **GUTEL, Thibaut**
  **38054 Grenoble cedex 09 (FR)**
- **PICARD, Lionel**
  **38054 Grenoble cedex 09 (FR)**

(74) Mandataire: **Ipsilon**
**12 Avenue d'Italie**
**75013 Paris (FR)**

(56) Documents cités:
**WO-A1-2018/158545 CN-B- 108 923 064**

- **BING SUN ET AL: "Polycarbonate-based solid polymer electrolytes for Li-ion batteries", SOLID STATE IONICS, vol. 262, 1 September 2014 (2014-09-01), NL, pages 738 - 742, XP055544072, ISSN: 0167-2738, DOI: 10.1016/j.ssi.2013.08.014**
- **LIAO ET AL: "Rapid synthesis of poly(trimethylene carbonate) by microwave-assisted ring-opening polymerization", EUROPEAN POLYMER JOURNAL, PERGAMON PRESS LTD OXFORD, GB, vol. 43, no. 10, 28 September 2007 (2007-09-28), pages 4289 - 4296, XP022277519, ISSN: 0014-3057, DOI: 10.1016/J.EURPOLYMJ.2007.07.009**
- **MINDEMARK JONAS ET AL: "Copolymers of trimethylene carbonate and [epsilon]-caprolactone as electrolytes for lithium-ion batteries", POLYMER, vol. 63, 1 April 2015 (2015-04-01), GB, pages 91 - 98, XP055838315, ISSN: 0032-3861, DOI: 10.1016/j.polymer.2015.02.052**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08K 3/30, C08L 69/00;**
**C08K 3/30, C08L 69/005;**
**C08K 3/32, C08L 69/00;**
**C08K 3/32, C08L 69/005;**
**C08K 3/34, C08L 69/00;**
**C08K 3/34, C08L 69/005**

## Description

### Domaine technique

La présente invention se rapporte à une nouvelle méthode de préparation d'électrolytes solides, utiles pour former une membrane électrolytique solide dans des dispositifs électrochimiques, par exemple des batteries au lithium, et présentant des performances améliorées. Les électrolytes selon l'invention sont à base de polycarbonates aliphatiques, en particulier à base de poly(triméthylène carbonate) (PTMC) ou de leurs copolymères avec l'ε-caprolactone (PTMC-PCL), synthétisés par (co)polymérisation par ouverture de cycle (ROP), ladite réaction de (co)polymérisation étant opérée en l'absence de catalyseur et sous irradiation par micro-ondes.

Ces électrolytes solides, notamment de type électrolyte polymérique solide (SPE) ou électrolyte solide hybride (HSE), trouvent des applications particulièrement avantageuses dans différents systèmes ou dispositifs électrochimiques, notamment dans des batteries rechargeables, par exemple des batteries au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les batteries au lithium, mettant en œuvre des électrolytes à l'état solide (dits encore « SSE s» pour l'acronyme anglo-saxon « Solid-State Electrolyte ») sont considérées comme la prochaine génération des dispositifs de stockage d'énergie, permettant d'atteindre des densités d'énergie plus élevées, une sécurité accrue du fait de l'absence de solvant, moins d'exigences sur les circuits d'emballage et de surveillance de l'état de charge, etc.

Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs en raison de la flexibilité élevée de ces électrolytes, qui autorise leur mise en œuvre pour l'élaboration de batteries d'épaisseur réduite et présentant une plus grande flexibilité.

Les SPEs et HSEs les plus répandus, notamment pour des dispositifs électrochimiques au lithium, sont à base de polyéthers, et plus particulièrement de poly(oxyéthylène) (POE) et leurs dérivés, en raison de leur faible température de transition vitreuse (Tg), de l'ordre de - 60°C, comparativement à d'autres polymères, et de leur aptitude à complexer les cations $Li^+$. Toutefois, ces électrolytes présentent des performances limitées en matière de nombre de transport des ions (t+) et de conductivité ionique liées au mécanisme de complexation des ions. Ainsi, pour un électrolyte solide polymérique à base de POE, par exemple, le nombre de transport ionique t+ est généralement de l'ordre de 0,1 à 0,3. Par ailleurs, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La plupart des SPE à base de POE sont également associés à des diagrammes de phase complexes, avec plusieurs phases présentes dans de larges intervalles de température, ce qui rend le comportement de conductivité imprévisible. La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. $Li/Li^+$), ce qui rend ce type de SPEs adapté uniquement pour leur mise en œuvre avec des cathodes à bas potentiel, comme par exemple de type $LiFePO_4$ (LFP).

De fait, de nombreux polymères alternatifs ont été développés ces dernières années, comme par exemple des polycarbonates, polyesters, poly(arylène éther sulfone)s, polynitriles, polyalcools et polyamines, etc. Parmi eux, les polycarbonates aliphatiques, en particulier le poly(triméthylène carbonate) (PTMC) et ses copolymères, sont apparus

comme des matériaux hôtes alternatifs au POE, particulièrement intéressants pour former des électrolytes polymériques solides, en raison de leur structure fortement amorphe, de la flexibilité de leurs segments de chaîne, de leur constante diélectrique élevée, de leur faible toxicité et de leurs bonnes propriétés mécaniques. Il a ainsi été montré que le PTMC, et ses copolymères avec la ε-caprolactone (CL), permettent d'obtenir des performances améliorées, comparativement au POE, en termes de conductivité ionique du matériau électrolyte solide à température ambiante, de sa large fenêtre de stabilité électrochimique (jusqu'à 5,0 V vs. $Li/Li^+$), du nombre de transport ionique (t+>0,5) ou encore de sa stabilité thermique, ce qui rend ces matériaux polymériques particulièrement prometteurs pour former la nouvelle génération de SPEs.

Actuellement, la plupart des polycarbonates aliphatiques, proposés pour des applications comme électrolytes polymériques solides, par exemple dans des batteries rechargeables au lithium, sont obtenus par deux voies de synthèses différentes, d'une part, par copolymérisation entre le $CO_2$ et des époxydes et, d'autre part, par polymérisation par ouverture de cycle de carbonates cycliques catalysée par l'octanoate stanneux ($Sn(Oct)_2$). Pour ce qui est de la première voie de synthèse, Tominaga *et al.* [1] décrit ainsi pour la première fois la synthèse de poly(éthylène carbonate) (PEC) *via* la copolymérisation de $CO_2$ et de monomères époxy mettant en œuvre du glutarate de zinc comme catalyseur. Quatre types de PEC présentant des groupes latéraux phényle, n-butyle, t-butyle ou méthoxyéthyle sont synthétisés et mis en œuvre pour former des membranes d'électrolyte polymérique solide comprenant 10% molaire de bis(trifluorométhylsulfonylimide) de lithium (LiTFSI). Les essais de conductivité montrent que l'électrolyte à base du PEC présentant des groupes latéraux méthoxyéthyle présente la conductivité la plus élevée, de l'ordre de $10^{-6}$ $S.cm^{-1}$ à température ambiante.

Malheureusement, cette voie de synthèse ne permet pas un contrôle satisfaisant de la structure chimique des polymères formés en raison des différentes réactions secondaires pouvant intervenir pendant leur synthèse, telle que la formation de liaisons éther due à l'ouverture de cycle consécutive des époxydes ou encore la production de carbonates cycliques par une réaction compétitive dite de « transfert de chaine » (ou « backbiting » en terminologie anglosaxonne [2]). Ainsi, cette voie de synthèse a trouvé davantage d'intérêt pour des applications dans le domaine de la chimie verte et des biomatériaux que dans celui des batteries rechargeables pour lesquelles la fenêtre de stabilité électrochimique des électrolytes polymériques est très sensible aux défauts de la structure chimique du polymère. D'ailleurs, dans la publication [3], Kimura *et al.* rapportent que les électrolytes solides hybrides à base de poly(éthylène carbonate), LiTFSI et d'un liquide ionique à base de pyrrolidinium, permettent d'atteindre une stabilité anodique uniquement jusqu'à 4,3 V *versus* $Li^+/Li$. Par ailleurs, les balayages continus cathodiques permettent d'identifier peu de pics caractéristiques de l'insertion/désinsertion des ions $Li^+$ et montrent une faible stabilité en réduction vis-à-vis d'une anode en lithium.

Concernant la deuxième voie de synthèse, Brandell *et al.* ([4]) décrivent la synthèse de poly(triméthylène carbonate) de haut poids moléculaire (368000 $g.mol^{-1}$) par polymérisation en masse, par ouverture de cycle catalysée par de l'octanoate stanneux ($Sn(Oct)_2$), pour former des électrolytes polymériques solides dans des batteries au lithium. Le polymère obtenu est mélangé avec du LiTFSI en solution et mis en forme pour obtenir des films SPE flexibles. Les systèmes les plus conducteurs sont atteints pour des ratios molaires des groupes carbonyles des unités monomères par rapport au lithium $[CO]/[Li^+]$ de 13 et 8, avec une stabilité électrochimique jusqu'à 5,0 V *versus* $Li/Li^+$, plus élevée que celle obtenue avec les POE, mais une conductivité ionique d'environ $10^{-7}$ $S.cm^{-1}$ à 60°C, ce qui est loin d'être satisfaisant pour une application comme SPE. En mettant en œuvre la même voie de synthèse, Mindemark *et al.* [5] décrivent la synthèse de copolymères aléatoires de triméthylène carbonate (TMC) et d'ε-caprolactone (CL), de masse moléculaire allant de 457000 à 508000 $g.mol^{-1}$, pour une application comme SPE. Les membranes électrolytiques, formées à partir de ces copolymères en combinaison avec un sel LiTFSI, présentent une diminution de la température de transition vitreuse Tg et une augmentation de la conductivité ionique avec l'augmentation de la teneur en CL. L'électrolyte, présentant les meilleures performances, est obtenu pour un ratio TMC :CL de 60 :40 et 28 % en poids de LiTFSI et permet d'atteindre une Tg de -26°C avec une conductivité de $1,6.10^{-5}$ $S.cm^{-1}$ à 60°C ($7,9.10^{-7}$ $S.cm^{-1}$ à 25°C) et une large fenêtre de stabilité électrochimique. L'électrolyte de composition optimisée précitée est testé en demi-cellule $LiFePO_4$ tout solide, et conduit à une capacité et une efficacité coulombique élevées pour des régimes de charge allant jusqu'à C/5 inclus. Dans les premiers cycles, l'électrolyte à base dudit copolymère montre une performance améliorée comparativement aux électrolytes préparés à partir de l'homopolymère PTMC, indiquant ainsi un meilleur contact interfacial pour l'électrolyte intégrant du CL comme comonomère.

Toutefois, la voie de synthèse par polymérisation par ouverture de cycle, comme proposé par Brandell *et al.* et Mindemark *et al.,* requiert la mise en œuvre d'un catalyseur (le $Sn(Oct)_2$) et des temps de réaction longs (au moins 72 heures) pour des températures élevées (≥130 °C), ce qui ne permet pas d'envisager leur transposition à l'échelle industrielle, en raison d'une consommation trop élevée d'énergie. Qui plus est, les conditions sévères de synthèse à hautes températures ne permettent pas un contrôle de la structure chimique des polycarbonates obtenus. Elles sont susceptibles d'induire des défauts dans la structure chimique des polymères obtenus. Enfin, le catalyseur mis en œuvre, $Sn(Oct)_2$, ne peut être totalement éliminé du produit final du fait de sa solubilité similaire à celle du polymère synthétisé dans de nombreux solvants organiques. Pour des nombreuses applications de ces polymères, par exemple comme biomatériaux, la présence résiduelle du catalyseur au sein du matériau polymérique formé ne pose pas de problème. Toutefois, pour des applications liées à des processus électrochimiques, comme dans les batteries rechargeables au

lithium, la présence de catalyseur, et en particulier de cations métalliques tels que $Sn^{2+}$, $Zn^{2+}$, etc., est susceptible d'avoir des effets néfastes sur les performances et la durabilité des batteries, puisque ces cations peuvent également être réduits/oxydés au cours des processus de charge/décharge.

Par conséquent, des études ont été menées en vue de développer des voies de synthèse alternatives pour obtenir des polycarbonates aliphatiques appropriés pour leur mise en œuvre pour des batteries rechargeables. Par exemple, Mecerreyes *et al.* [6] proposent la synthèse de polycarbonates aliphatiques, présentant des poids moléculaires compris entre 8000 et 43 000 $g.mol^{-1}$, par polycondensation du carbonate de diméthyle et de diols aliphatiques, catalysée par la 4-diméthylaminopyridine (DMAP). L'ensemble des polycarbonates aliphatiques obtenus sont semi-cristallins avec des températures de fusion comprises entre 45 et 63 °C et des températures de transition vitreuse d'environ -40°C. Ces polycarbonates ont été testés, en combinaison avec le sel LiTFSI, pour leur efficacité comme matrice hôte pour former des SPEs. La conductivité ionique la plus élevée de $1.10^{-4}$ $S.cm^{-1}$ à température ambiante est atteinte pour un poly(dodécaméthylène carbonate) mis en œuvre en combinaison avec 80 % massique de LiTFSI. Toutefois, les polyélectrolytes préparés à partir de ces polycarbonates aliphatiques présentent une fenêtre de stabilité électrochimique allant jusqu'à 4 V seulement et, par conséquent guère meilleure que celle obtenue avec les POE. Ceci pourrait être lié à la voie de synthèse de ces polycarbonates, conduite à des températures très élevées (180°C) et à pression élevée, et susceptible d'induire davantage de défauts dans la structure chimique des polymères.

Ainsi, malgré les études menées en vue de proposer des voies de synthèses alternatives, la polymérisation par ouverture de cycle catalysée par $Sn(Oct)_2$ demeure, jusqu'à présent, la voie de synthèse privilégiée pour obtenir des polycarbonates aliphatiques destinés à former des électrolytes solides dans des batteries rechargeables, notamment dans des batteries au lithium.

Il demeure ainsi un besoin de disposer d'une nouvelle voie de synthèse de polycarbonates aliphatiques, qui permette d'accéder à des électrolytes solides présentant des performances améliorées.

La présente invention vise précisément à répondre à ce besoin.

## Résumé de l'invention

La présente invention propose ainsi une nouvelle méthode de préparation d'électrolytes solides à partir de la synthèse de polycarbonates aliphatiques, en particulier de type poly(triméthylène carbonate) et leurs copolymères avec l'ε-caprolactone, permettant de s'affranchir des inconvénients précités.

Plus particulièrement, elle concerne, selon un premier de ses aspects, un procédé de préparation d'un électrolyte solide, destiné à un système électrochimique, en particulier à une batterie rechargeable, comprenant au moins les étapes suivantes :

(i) synthèse d'au moins un (co)polymère par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;

(ii) éventuellement, protection des fonctions hydroxyles en bout de chaîne du ou desdits (co)polymères ;

(iii) mélange, en présence ou non d'un milieu solvant, du ou desdits (co)polymères obtenus en étape (i) ou (ii), avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des ions lithium ; et

(iv) formation, en particulier en surface d'un substrat, d'un électrolyte solide à partir dudit mélange.

On désignera plus simplement dans la suite du texte, sous l'appellation « polycarbonate aliphatique » ou encore « polycarbonate », un (co)polymère obtenu par (co)polymérisation dans les conditions de synthèse selon l'invention d'au moins un carbonate cyclique de cinq à huit chaînons et, éventuellement, d'au moins une lactone.

De manière avantageuse, le ou lesdits (co)polymères sont des poly(triméthylène carbonate) (notés PTMC dans la suite du texte) ou des copolymères poly(triméthylène carbonate)-poly(ε-caprolactone) (notés PTMC-PCL dans la suite du texte), obtenus par polymérisation par ouverture de cycle du triméthylène carbonate (TMC), éventuellement par copolymérisation avec l'ε-caprolactone (CL).

Par « électrolyte solide », on entend un électrolyte excluant la présence d'un composant sous forme liquide, et pouvant faire office à la fois de séparateur et de conducteur ionique dans un système électrochimique. L'électrolyte solide selon l'invention se présente plus particulièrement sous la forme d'un film ou membrane électrolytique solide dans un système électrochimique. Les films ou membranes d'électrolyte solide préparés selon l'invention présentent avantageusement une bonne flexibilité.

Comme détaillé dans la suite du texte, les électrolytes solides préparés selon l'invention peuvent être de type électrolyte polymérique solide (SPE) ou électrolyte solide hybride (HSE).

Comme détaillé dans la suite du texte, la (co)polymérisation en étape (i) du procédé de l'invention peut être conduite en milieu solvant ou non. Avantageusement, elle est opérée sans solvant (en masse).

De manière avantageuse, la (co)polymérisation en étape (i) est opérée en présence d'un composé, en particulier d'une molécule organique, dit « initiateur » (ou « amorceur »), présentant une ou plusieurs fonctions hydroxyles, ajouté au milieu réactionnel initial, en particulier choisi parmi les alcools, notamment les alcools portant une à quatre fonction(s) hydroxyle(s).

Selon un mode de réalisation particulier, le procédé de l'invention met en œuvre une étape (ii) au cours de laquelle les fonctions hydroxyles en bout de chaine des polycarbonates selon l'invention sont protégées. La protection des fonctions hydroxyles des polycarbonates selon l'invention peut être plus particulièrement réalisée par réaction de la ou desdites fonctions hydroxyles en bout de chaine des polycarbonates, avec au moins un composé, dit agent de protection, choisi parmi les chlorures d'acyle, les anhydrides d'acide et les isocyanates. Elle peut être opérée en ajoutant directement le ou lesdits agents de protection dans le milieu réactionnel obtenu à l'issue de la (co)polymérisation en étape (i).

L'irradiation par micro-ondes a déjà été proposée pour conduire différentes réactions de polymérisation telles que des réactions de polycondensation, de polymérisation radicalaire contrôlée et de polymérisation par ouverture de cycle. Liao *et al.* [7] décrivent ainsi la synthèse de poly(triméthylène carbonate) par polymérisation par ouverture de cycle assistée par micro-ondes, en présence ou non de l'éthylène glycol comme initiateur de réaction. L'irradiation par micro-ondes à une puissance de 10 W pendant une durée de 18 minutes permet ainsi d'obtenir un PTMC de masse moléculaire moyenne Mn de 15 200 $g.mol^{-1}$, avec un taux de conversion de 92 %. La mise en œuvre d'une durée et puissance d'irradiation plus élevées conduisent à un taux de conversion supérieur (95-96 %), mais la masse moléculaire Mn des polymères obtenus est alors réduite, due à une dégradation thermique. De fait, les réactions assistées par micro-ondes proposées par Liao *et al.* sont conduites sans contrôle de la température de réaction. Ainsi, à une puissance d'irradiation de 10 W, une température maximale de 154 °C est atteinte au bout de 17 minutes et décroît ensuite pour atteindre un plateau après 24 minutes d'irradiation. A des puissances d'irradiation plus élevées, i.e. 20 W et 30 W, un pic exothermique de 168 et 173 °C est atteint à 8 et 9 minutes respectivement.

Ainsi, la polymérisation assistée par micro-ondes dans les conditions décrites dans cette publication ne permet pas de contrôler la masse moléculaire des PTMC obtenus, les masses moléculaires Mn des polycarbonates obtenus étant très différentes et indépendantes des masses moléculaires théoriques calculées sur la base du ratio molaire entre les monomères et l'initiateur. Par exemple, la masse moléculaire « $M_{n,theorical}$ », attendue pour le PTMC synthétisé dans les conditions décrites précédemment, était de 95 000 $g.mol^{-1}$, bien supérieure à la masse moléculaire $M_{n,GPC}$ de 15 200 $g.mol^{-1}$, du polycarbonate obtenu.

On peut également citer la publication [8] de Liao *et al.,* qui décrit la synthèse de copolymères triblocs poly(triméthylène carbonate)-b-poly(éthylène glycol)-b-poly(triméthylène glycol) (PTMC-PEG-PTMC), par copolymérisation par ouverture de cycle assistée par micro-ondes, en l'absence de catalyseur. En présence du PEG600, un copolymère de masse moléculaire moyenne Mn de 16 600 $g.mol^{-1}$ est obtenu après irradiation aux micro-ondes à 120°C pendant 60 minutes. Ces travaux ont toutefois uniquement trait à la synthèse de matériaux polymériques pour des applications comme biomatériaux, par exemple dans le domaine biomédical en raison de la biocompatibilité de ces polymères et de l'absence de catalyseur métallique ou toxique.

A la connaissance des inventeurs, il n'a jamais été proposé de tirer profit de la synthèse par ROP assistée par micro-ondes pour la préparation de polycarbonates aliphatiques et leurs copolymères, pour une mise en œuvre pour former des électrolytes solides, en particulier dans des batteries rechargeables au lithium.

Comme illustré dans les exemples qui suivent, les inventeurs ont montré qu'il est possible d'accéder, à partir de la synthèse par (co)polymérisation par ouverture de cycle (dite encore « ROP » pour « Ring-Opening Polymerization » en terminologie anglosaxonne), assistée par micro-ondes et en l'absence de catalyseur, de polycarbonates aliphatiques, en particulier de type PTMC et PTMC-PCL, de structure chimique contrôlée, à des électrolytes solides présentant d'excellentes performances, en particulier en termes de conductivité ionique et de stabilité électrochimique.

En particulier, il est du mérite des inventeurs d'avoir développé des conditions spécifiques de synthèse des polycarbonates par (co)polymérisation par ouverture de cycle assistée par micro-ondes permettant de contrôler la structure chimique des polycarbonates obtenus, ainsi qu'avantageusement, leur masse molaire, et ce pour des temps de réaction limités et viables à l'échelle industrielle.

Comme détaillé dans la suite du texte, la (co)polymérisation mise en œuvre selon l'invention est avantageusement opérée en contrôlant la température du milieu réactionnel, en particulier en maintenant une température du milieu réactionnel comprise entre 100 et 200 °C, notamment entre 120 et 160 °C. Le contrôle de la température au cours de l'irradiation par micro-ondes permet d'accroître la durée d'irradiation pour augmenter la conversion en monomères, sans impacter sur les polycarbonates formés, en particulier sans induire de dégradation des polycarbonates synthétisés.

La (co)polymérisation peut être opérée par exemple en soumettant le milieu réactionnel à une irradiation par des micro-ondes, à une puissance comprise entre 30 et 300 W, en particulier inférieure ou égale à 100 W, à une température contrôlée, en particulier comprise entre 100 et 200 °C, notamment entre 120 et 160 °C et pendant une durée minimale de 30 minutes pour un procédé en continu ou pendant une durée comprise entre 30 et 300 minutes pour un procédé en

discontinu, notamment entre 60 et 180 minutes.

Comme confirmé par analyse RMN $^1H$, les polycarbonates synthétisés selon l'invention présentent avantageusement peu de défauts, voire ne présentent pas de défaut, dans leur structure chimique.

Selon un mode de réalisation particulier, les polycarbonates synthétisés selon l'invention présentent une masse molaire moyenne en nombre, Mn, inférieure ou égale à 100 000 $g.mol^{-1}$, en particulier comprise entre 5 000 et 100 000 $g.mol^{-1}$ et plus particulièrement entre 5 000 et 50 000 $g.mol^{-1}$.

L'indice de polydispersité des polycarbonates synthétisés peut être inférieur ou égal à 3,5, en particulier inférieur ou égal à 2,5.

Par ailleurs, comparativement aux voies de synthèse classiquement mises en œuvre telles que discutées précédemment, la synthèse des polycarbonates par ROP assistée par micro-ondes permet d'obtenir les polycarbonates souhaités avec un taux de conversion des monomères élevé pour une durée de réaction significativement réduite, en particulier inférieure ou égale à 5 heures, en particulier inférieure ou égale à 3 heures et avantageusement entre 1 ou 2 heures.

La voie de synthèse des polycarbonates selon l'invention s'avère également avantageuse en termes de consommation d'énergie, comparativement aux voies usuellement mises en œuvre requérant des températures de synthèse élevées pendant deux ou trois jours.

En outre, du fait de l'absence de catalyseur, la synthèse conduite dans les conditions selon l'invention permet de s'affranchir des problèmes de purification rencontrés en mettant en œuvre les voies de synthèse conventionnelles telles que décrites précédemment, en particulier liés à l'élimination difficile du catalyseur de type $Sn(Oct)_2$. Ainsi, de manière avantageuse, la synthèse des polycarbonates conduite dans les conditions de l'invention ne requiert pas d'étapes de purification et de lavage des (co)polymères obtenus, mises en œuvre selon les voies de synthèse conventionnelles pour éliminer le catalyseur, et permet avantageusement d'accéder à des polycarbonates présentant un degré de pureté élevée, supérieur à celui pouvant être atteint *via* les voies de synthèses usuellement mises en œuvre. La (co)plymérisation des polycarbonates, opérée par ROP assistée par micro-ondes selon l'invention, présente également l'avantage de requérir peu, voire même de s'affranchir de la mise en œuvre de solvant(s) organique(s).

Enfin, la mise en œuvre des polycarbonates synthétisés selon l'invention pour former des électrolytes solides s'avère avantageuse à plusieurs titres.

Les électrolytes solides obtenus à partir des polycarbonates, en particulier de type PTMC ou PTMC-PCL, synthétisés selon l'invention, mis en œuvre à titre d'électrolyte solide dans une batterie au lithium conduisent ainsi à un dispositif de stockage présentant d'excellentes performances, en particulier une conductivité ionique élevée, en particulier supérieure ou égale à $10^{-5}$ $S.cm^{-1}$ à 60°C, en particulier supérieure ou égale à $1,0.10^{-5}$ $S.cm^{-1}$ pour le PTMC et supérieure ou égale à $4,0.10^{-5}$ $S.cm^{-1}$ pour le copolymère PTMC-PCL; et un nombre de transport des ions lithium, noté t+, supérieur ou égal à 0,50 à 60°C, en particulier supérieur ou égal à 0,60 pour le PTMC et supérieur ou égal à 0,50 pour le copolymère PTMC-PCL.

Les électrolytes solides préparés selon l'invention à partir des polycarbonates synthétisés selon l'invention présentent également une bonne tenue mécanique, une grande stabilité thermique (qui assure la sécurité des dispositifs de stockage d'énergie les comprenant) et une stabilité en potentiel améliorée.

En particulier, ils présentent une large fenêtre de stabilité électrochimique, en particulier jusqu'à 4,50 V *versus* $Li/Li^+$. Ainsi, un électrolyte solide à base de polycarbonates obtenus selon l'invention, en particulier à base de PTMC ou PTMC-PCL, peut avantageusement être mis en œuvre dans des batteries de densité énergétique élevée, en combinaison avec des électrodes positives dites à « haut » potentiel, c'est-à-dire fonctionnant à une différence de potentiel supérieure à 4,0 V *versus* $Li/Li^+$, en particulier supérieure ou égale à 4,3V versus $Li/Li^+$, telles que des batteries $Li^0$ vs. $LiNi_{1/3}Mn_{1/3}Co_{1/3}O_2$, sans impacter sur la stabilité thermique et électrochimique de l'électrolyte.

Un système électrochimique, en particulier une batterie au lithium, comprenant un électrolyte solide selon l'invention, peut également fonctionner sur une large plage de températures, de préférence entre -20 °C et 90 °C, en particulier entre -10 °C et 80 °C.

L'invention concerne ainsi, selon un autre de ses aspects, l'utilisation d'au moins un (co)polymère, obtenu par ROP d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;

et dont les fonctions hydroxyles en bout de chaîne sont éventuellement protégées ;
pour former, en combinaison avec au moins un sel de métal alcalin ou alcalino-terreux, un électrolyte solide destiné à un système électrochimique, en particulier à une batterie rechargeable, notamment une batterie au lithium.

Le (co)polymère peut notamment être obtenu dans les conditions décrites pour la synthèse du (co)polymère dans le cadre du procédé de l'invention.

L'invention concerne encore un électrolyte solide, en particulier tel qu'obtenu selon le procédé de l'invention,

notamment de type électrolyte polymérique solide (SPE) ou électrolyte solide hybride (HSE), comprenant, voire étant formé de :

- au moins un (co)polymère obtenu par ROP d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;
  et dont les fonctions hydroxyles en bout de chaîne sont éventuellement protégées ;
- au moins un sel de métal alcalin ou alcalino-terreux, en particulier un sel de lithium ; et
- éventuellement au moins une charge inorganique conductrice du ou des cations alcalins ou alcalino-terreux, en particulier une charge inorganique conductrice des ions lithium.

Les électrolytes solides formés selon l'invention peuvent trouver des applications dans des systèmes électrochimiques variés, notamment dans des systèmes de stockage de l'énergie, en particulier dans des batteries rechargeables, notamment des batteries au lithium.

Ainsi, l'invention concerne encore l'utilisation d'un électrolyte solide selon l'invention, dans un système électrochimique, en particulier dans une batterie au lithium.

Elle concerne encore un système électrochimique, en particulier un dispositif de stockage de l'énergie, notamment une batterie rechargeable, en particulier une batterie au lithium, notamment une batterie lithium-ion ou lithium-métal, comprenant un électrolyte solide, en particulier un film d'électrolyte solide, tel que défini précédemment ou tel qu'obtenu selon le procédé de l'invention.

D'autres caractéristiques, variantes et avantages des électrolytes polymériques solides selon l'invention, et de leur préparation, ressortiront mieux à la lecture de la description, des exemples et figures qui vont suivre, donnés à titre illustratif et non limitatif de l'invention.

## Brève description des dessins

[Fig 1] présente les spectres RMN $^1H$ des polymères PTMC de masse moléculaire moyenne Mn d'environ 10 000 $g.mol^{-1}$, initiés par PPA et synthétisés, en exemple 1, à l'aide (a) du catalyseur $Sn(Oct)_2$ (S10PPA), (b) de l'irradiation par micro-ondes en présence de toluène (MW10PPA-T), et (c) de l'irradiation par micro-ondes en absence de solvant (MW10PPA);

[Fig 2] présente les spectres RMN $^1H$ du polymère PTMC synthétisés, en exemple 1, à l'aide de l'irradiation par micro-ondes en absence de solvant et de l'initiateur (MWx) ;

[Fig 3] présente les spectres RMN $^1H$ des copolymères PTMC60-PCL40 (10 000 $g.mol^{-1}$) initiés pas PPA et synthétisés, en exemple 2, à l'aide (a) du catalyseur $Sn(Oct)_2$ (R10PPA) et (b) de l'irradiation par micro-ondes en présence du toluène (M10PPA-T) ;

[Fig 4] présente les courbes de conductivité ionique en fonction de la température, obtenues pour les électrolytes polymériques solides à base de PTMC, initié par PPA et synthétisés, en exemple 1, à l'aide (a) de l'irradiation par micro-ondes en présence du toluène (MW10PPA-T) et (b) à l'aide du catalyseur $Sn(Oct)_2$ (S10PPA), préparés en exemple 3, avec le ratio $[CO]/[Li^+] = 15$ ;

[Fig 5] présente les courbes de conductivité ionique en fonction de la température, obtenues pour les électrolytes polymériques solides à base de copolymère PTMC60-PCL40, initié par PPA et synthétisés, en exemple 2, à l'aide (a) de l'irradiation par micro-ondes (M10PPA-T) et (b) du catalyseur $Sn(Oct)_2$ (R10PPA), préparés en exemple 3, avec le ratio $[CO]/[Li^+] = 15$ ;

[Fig 6] présente les courbes de voltampérométrie cyclique obtenues pour les électrolytes MW10PPA-T-TFSI15 et S10PPA-TFSI15, comme décrit en exemple 3 ;

[Fig 7] présente les courbes de voltampérométrie cyclique obtenues pour les électrolytes M10PPA-T-TFSI15 et R10PPA-TFSI15, comme décrit en exemple 3 ;

[Fig 8] présente les courbes de voltampérométrie cyclique des électrolytes MW10PPA-T-TFSI15et MW10PPA-T-BC-TFSI15, comme décrit en exemple 3.

Dans la suite du texte, les expressions « compris entre ... et ... », « allant de ... à ... » et « variant de ... à ... » sont équivalentes et entendent signifier que les bornes sont incluses, sauf mention contraire.

## Description détaillée

**SYNTHESE DU (CO)POLYMERE DE TYPE POLYCARBONATE PAR ROP ASSISTEE PAR MICRO-ONDES**

Comme indiqué précédemment, la préparation d'un électrolyte solide selon l'invention procède, dans un premier temps, à la synthèse d'un (co)polymère par (co)polymérisation par ouverture de cycle (dite encore « ROP » pour « Ring-Opening Polymerization » en terminologie anglosaxonne) d'au moins un carbonate cyclique de cinq à huit chaînons et, éventuellement, d'au moins une lactone de cinq à huit chaînons.

Par « copolymère », on entend un polymère dérivé d'au moins deux espèces différentes de monomères. Dans la suite du texte, en l'absence d'indications contraires, le terme « polymère » ou « polycarbonate » sera utilisé pour désigner, au sens large, aussi bien des homopolymères que des copolymères.

Les monomères carbonates cycliques peuvent être plus particulièrement de formule (I) suivante :

[Chem 1]

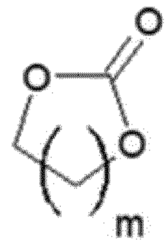

(I)

dans laquelle m est un entier compris entre 1 et 4, notamment entre 1 et 3, en particulier m vaut 1 ou 2 et plus particulièrement m vaut 2 ;
lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Les substituants du monomère carbonate cyclique, $R_1$, peuvent être plus particulièrement choisis parmi des groupements alkyles, en particulier en $C_1$ à $C_5$, linéaires ou ramifiés. Ainsi, les monomères carbonates cycliques peuvent être de formule (I') suivante

[Chem 2]

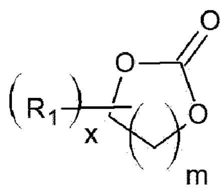

(I')

dans laquelle m est tel que défini précédemment ; x est un entier compris entre 0 et 2m+2 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le monomère carbonate cyclique est choisi parmi le triméthylène carbonate et ses dérivés. En particulier, le monomère carbonate cyclique est le triméthylène carbonate.

Selon une première variante de réalisation, le polycarbonate synthétisé selon l'invention est un (co)polymère obtenu par ROP d'un ou plusieurs monomères carbonate cyclique.

En particulier, il peut s'agir d'un poly(triméthylène carbonate), noté PTMC, obtenu par ROP du triméthylène carbonate (TMC).

Selon une autre variante de réalisation, le polymère synthétisé selon l'invention est un copolymère obtenu par ROP d'au moins un monomère carbonate cyclique, en particulier tel que défini précédemment, et d'au moins un monomère de type lactone.

De préférence, le ratio molaire entre le(s) monomère(s) carbonate cyclique et le(s) monomère(s) de type lactone est compris entre 90/10 et 10/90, en particulier entre 80/20 et 20/80, notamment compris entre 70/30 et 30/70 et plus particulièrement d'environ 60/40. Par lactone, on entend plus particulièrement des monomères répondant à la formule (II)

suivante :

[Chem 3]

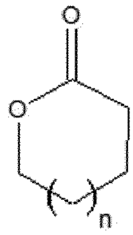

(II)

dans laquelle n vaut 0 ou est un entier allant de 1 à 3 ;
lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Ainsi, les monomères de type lactone peuvent être de formule (II') suivante :

[Chem 4]

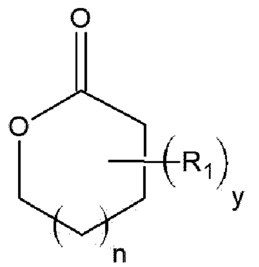

(II')

dans laquelle n est tel que défini précédemment ; y est un entier compris entre 0 et 2n+6 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le copolymère selon l'invention est formé à partir de l'ε-caprolactone (notée CL).

Les copolymères peuvent être plus particulièrement de type statistique (aléatoire) ou à gradient.

A titre d'exemple, le copolymère selon l'invention peut être formé à partir du triméthylène carbonate (TMC) et de l'ε-caprolactone (CL). Autrement dit, il peut s'agir d'un copolymère poly(triméthylène carbonate)-poly(ε-caprolactone) (PTMC-PCL), en particulier présentant un rapport molaire entre les unités monomériques dérivées du TMC et les unités monomériques dérivés de la CL compris entre 90/10 et 10/90, notamment entre 80/20 et 20/80, en particulier entre 70/30 et 30/70 et plus particulièrement d'environ 60/40.

Selon un mode de réalisation particulier, les (co)polymères synthétisés et mis en œuvre selon l'invention sont choisis parmi les PTMC, les copolymères PTMC-PCL, en particulier tels que décrits précédemment, et leurs mélanges.

Préparation des (co)polymères

Comme indiqué précédemment, les polycarbonates mis en œuvre l'invention pour former des électrolytes solides sont préparés par (co)polymérisation par ouverture de cycle des monomères tels que décrits précédemment, ladite réaction de ROP étant opérée sous irradiation par micro-ondes et en l'absence de catalyseur.

En particulier, la réaction par ROP ne met en œuvre aucun des catalyseurs classiquement utilisés pour les polymérisations par ouverture de cycle de carbonates cycliques ou lactones, tels que des catalyseurs métalliques d'étain, d'aluminium ou de zinc.

La (co)polymérisation selon l'invention est opérée en présence d'un composé, en particulier d'une molécule organique, comportant une ou plusieurs fonctions hydroxyles, dit « initiateur » (ou « amorceur »).

Le composé initiateur de la ROP peut être de diverses natures, pour autant qu'il présente au moins une fonction hydroxyle permettant d'amorcer la réaction de polymérisation. Il peut être choisi en particulier parmi l'eau et/ou les alcools, en particulier les alcools présentant une à quatre fonctions hydroxyle, et plus particulièrement une ou deux fonctions hydroxyle(s).

Selon un mode de réalisation particulier, l'initiateur de la ROP peut être de l'eau. Il peut s'agir par exemple de l'eau résiduelle apportée avec au moins l'un des monomères de type carbonate cyclique et/ou lactone mis en œuvre.

Selon un mode de réalisation particulièrement avantageux, l'initiateur est apporté en une quantité déterminée au mélange réactionnel initial.

Ledit initiateur ou amorceur de la ROP peut présenter une masse moléculaire moyenne en nombre allant de 90 à 1 000 $g.mol^{-1}$, en particulier de 90 à 500 $g.mol^{-1}$.

Il peut être plus particulièrement choisi parmi les alcools présentant une ou plusieurs fonctions hydroxyles, en particulier une à quatre fonctions hydroxyles, notamment une ou deux fonctions hydroxyles.

Selon un mode de réalisation particulier, l'initiateur est un monoalcool. Il peut s'agir plus particulièrement d'un composé ROH dans lequel le groupe R représente un groupement « non réactif ».

Par groupement « non réactif », on entend désigner un groupement non réactif dans les conditions de préparation et de mise en œuvre du polycarbonate selon l'invention. Plus particulièrement, le groupement R ne présente pas de fonction réactive vis-à-vis des monomères de type carbonate cyclique et lactone mis en œuvre, ni de fonction réactive vis-à-vis des métaux alcalins ou alcalino-terreux, notamment vis-à-vis du lithium métal, des sels de métaux alcalins ou alcalino-terreux, notamment vis-à-vis des sels de lithium.

Le groupement R peut être plus particulièrement :

. un groupe alkyle, linéaire ou ramifié, pouvant être substitué par des groupements mono- ou polycycliques ou mono- ou polyhétérocycliques, condensés ou non, saturés ou insaturés, aromatiques ou non ; ou

. un groupe mono- ou polycyclique ou mono- ou polyhétérocyclique, condensé ou non, saturé ou insaturé, aromatique ou non ;

le groupe alkyle et/ou le ou lesdits groupements mono- ou poly(hétéro)cycliques pouvant éventuellement être substitués par un ou plusieurs atomes de fluor.

Dans le cadre de l'invention, on entend par :

- « alkyle », un groupe aliphatique saturé, linéaire ou ramifié ; par exemple un groupe $C_{1-4}$-alkyle représente une chaîne carbonée de 1 à 4 atomes de carbone, linéaire ou ramifiée, plus particulièrement un méthyle, éthyle, propyle, isopropyle, butyle, isobutyle, tert-butyle ;
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

En particulier, un groupement polycyclique selon l'invention est formé de deux à six cycles, les cycles comprenant, indépendamment les uns des autres, de 4 à 6 chaînons. Le groupement polycyclique peut inclure un ou plusieurs hétéroatomes. On parle alors de « groupement polyhétérocyclique ».

L'initiateur mis en œuvre pour la synthèse des polycarbonates par ROP selon l'invention peut être par exemple choisi parmi les molécules suivantes.

[Chem 5]

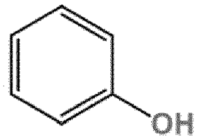
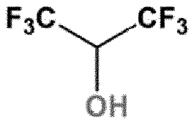
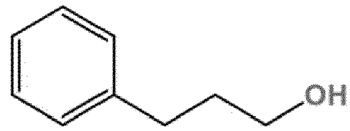
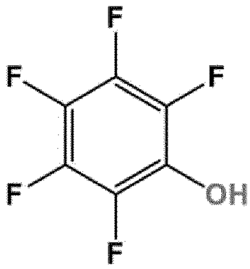
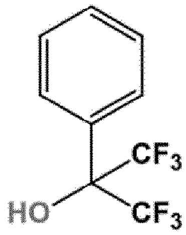
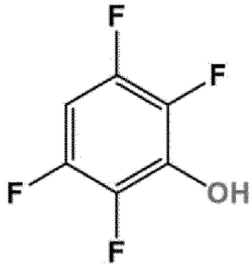
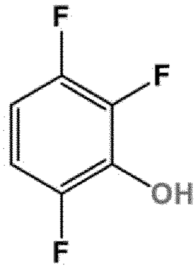
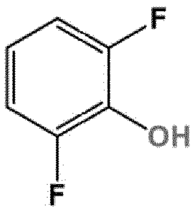
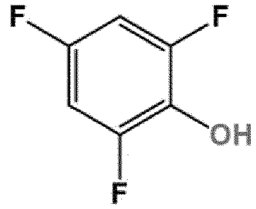
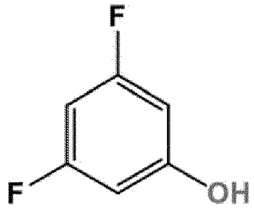
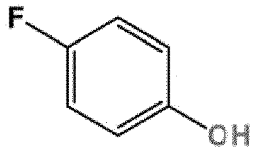
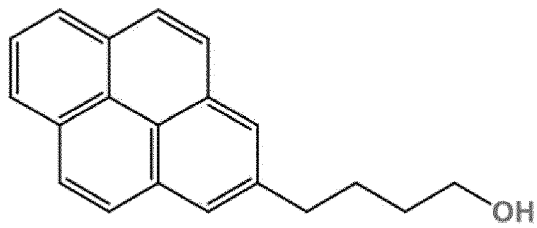

Selon un autre mode de réalisation particulier, l'initiateur est un composé présentant au moins deux fonctions hydroxyles, en particulier de deux à quatre fonctions hydroxyles, par exemple deux fonctions hydroxyles.

En particulier, il peut s'agir d'un composé de formule R'(-OH)$_x$, dans laquelle x représente un entier allant de 2 à 4 ; et R' représente un groupe non réactif divalent, trivalent ou tétravalent, en particulier un groupe alkylène, notamment en $C_1$ à $C_6$, en particulier en $C_1$ à $C_3$, linéaire ou ramifié, tel que l'éthylène glycol (également noté « EG ») ou le glycérol.

L'initiateur peut encore être de type macroamorceur. Par « macroamorceur » au sens de l'invention, on entend un polymère comportant à au moins l'une de ses extrémités, une fonction hydroxyle capable d'amorcer la réaction de ROP selon l'invention. Il permet de conduire à la formation d'un copolymère à blocs. Ledit macroamorceur peut être par exemple un polydiméthylsiloxane, porteur d'une fonction terminale hydroxyle.

La nature de l'initiateur mis en œuvre pour amorcer la réaction de ROP selon l'invention n'est nullement limitée aux composés précités, et d'autres initiateurs peuvent être envisagés. De manière avantageuse, dans le cas d'un initiateur présentant plusieurs fonctions hydroxyles, les valeurs de pKa des différentes fonctions hydroxyles sont sensiblement identiques. Il permet ainsi d'accéder à des polycarbonates à structure ramifiée, ou dendrimères, à ramifications symétriques.

Selon un mode de réalisation particulier, l'initiateur est choisi parmi le 3-phényl-1-propanol (également noté « PPA ») et l'éthylène glycol.

Dans le cas de la mise en œuvre d'un initiateur, celui-ci va être intégré en bout de chaîne du (co)polymère synthétisé par ROP catalysée par le MSA.

La mise en œuvre d'un initiateur de la ROP, en particulier apporté en une quantité déterminée, dans le mélange réactionnel initial, permet avantageusement de contrôler la masse molaire et la polydispersité des polycarbonates synthétisés selon l'invention.

Selon un mode de réalisation particulier, le ou lesdits monomères sont mis en œuvre en une quantité déterminée, en particulier telle que le rapport molaire monomère(s)/initiateur(s) est compris entre 40/1 et 1000/1, en particulier entre

50/1 et 500/1.

De manière avantageuse, la réaction de (co)polymérisation par ROP assistée par micro-ondes peut être réalisée à partir d'un mélange réactionnel comprenant une faible quantité de solvant voire étant exempt de solvant (polymérisation en masse).

Ainsi, la réaction de (co)polymérisation en étape (i) peut être opérée en présence d'un ou plusieurs solvant(s) organique(s), en particulier mis en œuvre en une teneur inférieure ou égale à 0,3 mL/g de monomère(s), en particulier inférieure ou égale à 0,1 mL/g de monomère(s), voire être exempt de solvant (polymérisation en masse).

Le ou lesdits solvants peuvent être plus particulièrement choisis parmi des solvants apolaires et aprotiques, en particulier choisis parmi le toluène, le diméthyle sulfoxide, le diméthyle acétamide et leurs mélanges.

Selon un mode de réalisation particulier, le milieu réactionnel de départ est formé du ou desdits monomères, du ou desdits initiateurs, et éventuellement d'un ou plusieurs solvants, en particulier dans une faible teneur telle qu'indiquée précédemment.

Selon un autre mode de réalisation particulier, la réaction de (co)polymérisation en étape (i) est opérée en l'absence de solvant.

Le milieu réactionnel de départ peut ainsi être uniquement formé du mélange du ou desdits monomères et du ou desdits initiateurs, en l'absence de solvant.

Comme indiqué précédemment, la (co)polymérisation par ROP est opérée en soumettant le milieu réactionnel à une irradiation par micro-ondes. Le rayonnement dans le domaine des micro-ondes peut inclure des longueurs d'ondes autorisés, soit 915 MHz, soit 2,45 GHz, en particulier 2,45 GHz.

L'irradiation par des micro-ondes peut être mise en œuvre en utilisant un four à micro-ondes tel que par exemple un four à micro-ondes CEM MARS, ou un générateur à micro-ondes.

Comme indiqué précédemment, l'irradiation par micro-ondes est avantageusement opérée en contrôlant la température du milieu réactionnel. En particulier, la température peut être maintenue à une valeur, de préférence constante, comprise entre 100 et 200 °C et plus particulièrement comprise entre 120°C et 160°C, notamment entre 120°C et 140°C. La température souhaitée peut être atteinte en imposant une montée en température à une vitesse de l'ordre de 10°C/minute à 50°C/minute.

Avantageusement, la puissance mise en œuvre lors de cette irradiation ne dépasse pas 300 W, en particulier est comprise entre 30 et 300 W et plus particulièrement entre 40 et 100 W. L'irradiation par micro-ondes peut être conduite pendant une durée comprise entre 30 minutes et 300 minutes, en particulier entre 60 et 180 minutes et plus particulièrement entre 60 et 120 minutes.

Selon un mode de réalisation particulier, la (co)polymérisation par ROP assistée par micro-ondes est opérée en soumettant le mélange réactionnel comprenant le ou lesdits monomères tel que décrit précédemment, en particulier présentant un rapport molaire monomère(s)/initiateur(s) compris entre 40/1 et 1000/1, à une irradiation par micro-ondes à une puissance inférieure ou égale à 300 W, en particulier comprise entre 30 et 300 W, notamment entre 40 et 100 W, pendant une durée d'irradiation comprise entre 30 et 300 minutes, notamment entre 60 et 180 minutes, en particulier entre 60 et 120 minutes et plus particulièrement d'environ 60 minutes, et à une température contrôlée comprise entre 100°C et 200 °C, notamment entre 120°C et 160 °C, en particulier entre 120°C et 140°C.

Le taux de conversion en monomères à l'issue de la synthèse des polycarbonates est avantageusement supérieur à 90 %, en particulier supérieur à 95 %. Le taux ou rendement de conversion peut être déterminé à partir des masses des (co)polymères obtenus et des masses en monomère(s) et en initiateur de départ.

La réaction de ROP peut être mise en œuvre en mode continu, semi-continu ou discontinu.

A l'issue de la (co)polymérisation, les polycarbonates peuvent éventuellement être soumis à une ou plusieurs étapes de lavage, par exemple par précipitation dans un ou plusieurs solvants polaires, typiquement du méthanol ou éthanol, pour éliminer les monomères n'ayant pas réagi, et récupéré par filtration et séchage.

Selon un mode de réalisation particulier, le procédé de l'invention ne nécessite aucune étape de purification, l'étape (iii) étant opérée directement à partir du ou desdits polycarbonates obtenus à l'issue de la synthèse en étape (i), éventuellement après protection des fonctions hydroxyles en bout de chaîne, sans étape de purification intermédiaire.

De manière avantageuse, le procédé selon l'invention s'affranchit ainsi d'étapes de purification mises en œuvre selon les voies de synthèse usuellement mises en œuvre, par exemple par ROP catalysée par le $Sn(Oct)_2$, pour éliminer le catalyseur métallique de la réaction. La synthèse conduite selon l'invention permet ainsi d'accéder à des polycarbonates présentant une pureté élevée sans nécessiter d'étape d'élimination du catalyseur. En particulier, la pureté des polycarbonates obtenus est avantageusement supérieure ou égale à 90 %, en particulier supérieure ou égale à 95 %, voire supérieure ou égale à 98 %, voire même supérieure ou égale à 99 %. La pureté peut être vérifiée par analyse RMN $^1H$ du produit obtenu.

Comme indiqué précédemment, la synthèse conduite par ROP assistée par micro-ondes dans les conditions telles que décrites précédemment permet avantageusement d'accéder à des polycarbonates présentant peu, voire pas de défauts dans leur structure chimique. L'absence de défauts structurels peut être confirmée par analyse RMN $^1H$ des (co)polymères.

Comme illustré dans les exemples, le spectre RMN d'un polycarbonate synthétisé selon l'invention présente ainsi un pic à 3,43 ppm, représentatif de liaisons éther, de très faible intensité, voire ne présente aucun pic identifiable à 3,43 ppm. En revanche, contrairement à un polycarbonate synthétisé selon l'invention, le spectre des polycarbonates synthétisés selon d'autres voies de synthèse, en particulier à l'aide du catalyseur $Sn(Oct)_2$, laisse apparaître un pic d'intensité plus élevée à 3,43 ppm, ce qui témoigne de la présence de défauts structurels (liaisons éther) au niveau de la structure des polycarbonates, à cause de réactions indésirables de décarboxylation.

La synthèse conduite par ROP dans les conditions de l'invention, avantageusement en présence d'un initiateur tel que décrit précédemment ajouté en quantité déterminée au milieu réaction initial, permet un bon contrôle de la masse molaire et de la polydispersité des polycarbonates obtenus.

En particulier, les polycarbonates synthétisés selon l'invention présentent avantageusement une masse molaire moyenne en nombre, notée Mn, inférieure ou égale à 200 000 $g.mol^{-1}$, en particulier comprise entre 5 000 et 100 000 $g.mol^{-1}$, en particulier entre 5 000 et 50 000 $g.mol^{-1}$. La masse molaire moyenne en nombre peut être mesurée par chromatographie par perméation de gel (ou GPC). Elle peut encore être obtenue à partir de l'analyse RMN $^1H$ du (co) polymère obtenu. La masse molaire moyenne peut être avantageusement contrôlée, de manière satisfaisante, par le rapport molaire du ou desdits monomère(s) à l'initiateur dans le mélange réactionnel initial.

Les (co)polymères synthétisés selon l'invention présentent avantageusement un indice de polydispersité inférieur ou égal à 3,5, en particulier inférieur ou égal à 2,5. L'indice de polydispersité, noté PDI, est égal au rapport de la masse molaire moyenne en poids Mw sur la masse molaire moyenne en nombre Mn. La masse molaire moyenne en poids peut être déterminée par chromatographie d'exclusion stérique, éventuellement couplée avec la diffusion de lumière statique.

Les polycarbonates synthétisés selon l'invention de type PTMC peuvent présenter une température de transition vitreuse, notée Tg, comprise entre -10 °C et -50 °C, en particulier entre -20 °C et -40 °C. Les copolymères de type PTMC-PCL peuvent présenter une Tg comprise entre -20°C et -70°C, en particulier entre -30°C et -60°C. La température de transition vitreuse peut être déterminée par analyse par calorimétrie différentielle à balayage (DSC pour « Differential Scanning Calorimetry » en terminologie anglo-saxonne).

Les polycarbonates obtenus en étape (i) à l'issue de la synthèse par ROP conduite selon l'invention, en présence d'un initiateur de type mono-alcool R-OH, peuvent être par exemple de formule (III) suivante :

[Chem 6]

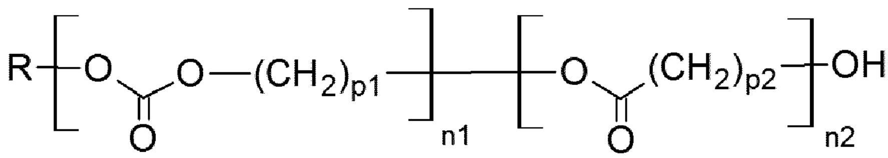

(III)

dans laquelle :

R représente le groupement issu de l'amorceur de type monoalcool ROH, tel que défini précédemment, par exemple un groupe phénylpropyle issu de l'initiateur PPA ;
p1 est un nombre entier allant de 2 à 4, en particulier p1 vaut 3 ;
p2 est un nombre entier allant de 4 à 7, en particulier p2 vaut 5 ;
n1 est un nombre entier positif, correspondant au nombre moyen d'unités monomériques dérivées des monomères carbonates cycliques, en particulier n1 est compris entre 40 et 500 ;
n2 vaut 0 ou est un nombre entier positif, correspondant au nombre moyen d'unités monomériques dérivées des monomères lactones, en particulier n2 est compris entre 40 et 500 ;
l'enchaînement des unités monomériques dans la formule (III) pouvant être aléatoire ou en gradient.

De préférence, comme décrit précédemment, le rapport molaire des unités monomériques dérivées des carbonates cycliques sur les unités monomériques dérivées des lactones, n1/n2, est compris entre 90/10 et 10/90, notamment entre 80/20 et 20/80, en particulier entre 70/30 et 30/70 et plus particulièrement vaut environ 60/40.

A titre d'exemple, les polycarbonates synthétisés selon l'invention peuvent présenter la structure de formule (III') suivante :

[Chem 7]

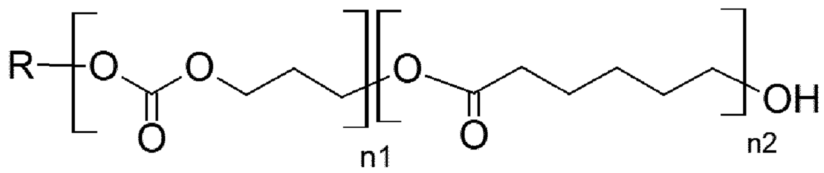

(III')

dans laquelle R, n1 et n2 sont tels que définis précédemment.

Bien entendu, des structures polymériques plus complexes, par exemple de type dendrimère, peuvent être obtenues à partir d'un initiateur mettant en œuvre plusieurs fonctions hydroxyles.

Comme évoqué précédemment, selon un mode de réalisation particulier, dans une étape (ii) du procédé de l'invention, la ou les fonctions hydroxyles en bout de chaines, dites encore « fonctions terminales », des polycarbonates synthétisés selon l'invention, sont protégées (ou coiffées) avant leur mise en œuvre pour former un électrolyte solide selon l'invention.

Un polycarbonate synthétisé selon l'invention peut comprendre une unique fonction hydroxyle terminale ou deux, voire plus de deux, fonctions hydroxyles terminales, en fonction notamment de la mise en œuvre, ou non, d'un initiateur de la réaction de ROP, ainsi que de la nature de l'initiateur (par exemple, mono-alcool ou diol).

La formation d'extrémités hydroxyle coiffées (plus généralement désignées sous l'appellation « end-capped » en terminologie anglo-saxonne) permet avantageusement d'accroître la stabilité électrochimique de l'électrolyte solide formé à partir du ou desdits polycarbonates, les fonctions terminales hydroxyle étant sensibles à la réduction et à l'oxydation, et susceptibles de se dégrader au contact des sels de lithium.

Une fonction hydroxyle est plus particulièrement protégée en formant une fonction plus stable chimiquement et électrochimiquement. Par exemple, l'étape (ii) peut être opérée par réaction de la ou desdites fonctions hydroxyles en bout de chaine des polycarbonates, avec au moins un composé, appelé « agent de protection », en particulier choisi parmi les chlorures d'acyle, par exemple le chlorure de benzoyle, le chlorure d'acétyle, etc. ; les anhydrides d'acide par exemple l'anhydride acétique comme décrit dans la publication [9], etc., et les isocyanates comme l'isocyanate de p-toluènesulfonyle, etc.

La protection des fonctions hydroxyles peut être réalisée en ajoutant directement le ou lesdits agents de protection dans le milieu réactionnel obtenu à l'issue de la (co)polymérisation en étape (i).

L'homme du métier est à même d'ajuster les conditions opératoires pour accéder à la protection de la ou des fonctions hydroxyles terminales des polycarbonates selon l'invention.

## PREPARATION DE L'ELECTROLYTE SOLIDE

Comme évoqué précédemment, les polycarbonates synthétisés selon l'invention, éventuellement après protection des fonctions hydroxyles en bout de chaîne, sont mis en œuvre pour former, en combinaison avec au moins un sel de métal alcalin ou alcalino-terreux, un électrolyte solide, pour une mise en œuvre dans un système électrochimique, en particulier une batterie rechargeable, par exemple une batterie au lithium.

L'électrolyte solide peut être un électrolyte polymérique solide (dit encore SPE pour « Solid Polymeric Electrolyte » en terminologie anglo-saxonne) ou un électrolyte solide hybride (HSE pour « Hybrid Solid Electrolyte » en terminologie anglo-saxonne).

L'électrolyte formé selon l'invention peut se présenter sous toute forme appropriée, par exemple sous forme d'un film ou d'une membrane.

La préparation d'un électrolyte solide à partir des polycarbonates synthétisés selon l'invention, met plus particulièrement en œuvre au moins les étapes suivantes :

- mélange en étape (iii), en présence ou non d'un milieu solvant, d'au moins :

  . un ou plusieurs polycarbonate(s) synthétisé(s) par ROP comme décrit précédemment ;
  . au moins un sel de métal alcalin ou alcalino-terreux, en particulier un sel de lithium, en particulier tel que décrit précédemment ; et
  . éventuellement, notamment dans le cas de la préparation d'un HSE, au moins une charge inorganique conductrice du ou des cations alcalin ou alcalino-terreux, en particulier conductrice d'ions lithium ;

- formation en étape (iv), en particulier en surface d'un substrat, d'un électrolyte solide à partir dudit mélange.

Le sel de métal alcalin ou alcalino-terreux est mis en œuvre avec le polycarbonate synthétisé selon l'invention pour assurer la conduction des ions.

Dans le cadre de l'invention, on entend par :

- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium. En particulier, le sel mis en œuvre est un sel de lithium.

A titre d'exemples de sel de lithium, on peut citer le $LiPF_6$, $LiClO_4$, $LiBF_4$, $LiAsF_6$, $LiCF_3SO_3$, $LiN(C_2F_5SO_2)_2$, le bis(trifluorométhylsulfonyl)imide de lithium $LiN[SO_2CF_3]_2$ (connu sous l'abréviation LiTFSI), le bis(fluorosulfonyl)amidure de lithium (connu sous l'abréviation LiFSI) $LiN[SO_2F]_2$, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato) borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI, LiTDI ou LiFSI, de préférence du LiTFSI ou LiFSI et plus préférentiellement du LiTFSI.

Il appartient à l'homme du métier d'ajuster la quantité en sels de métal alcalin ou alcalino-terreux, notamment au regard de la nature du polycarbonate mis en œuvre.

Selon un mode de réalisation particulier, les quantités en polycarbonate(s) et en sel(s) de lithium sont ajustées de sorte que le ratio molaire entre les groupes carbonyle du polycarbonate par rapport au lithium, noté $[CO]/[Li^+]$, soit compris entre 0,5 et 30, en particulier entre 5 et 15 et plus particulièrement entre 10 et 15, notamment d'environ 15.

Selon une première variante de réalisation, le ou lesdits polycarbonates selon l'invention sont mis en œuvre pour former un électrolyte polymérique solide (SPE), la préparation dudit électrolyte comprenant le mélange en étape (iii) d'au moins un polycarbonate synthétisé selon l'invention et d'au moins un sel de métal alcalin ou alcalino-terreux, par exemple d'un sel de lithium.

Selon une autre variante de réalisation, le ou lesdits polycarbonates selon l'invention sont mis en œuvre pour former un électrolyte solide hybride (HSE), la préparation dudit électrolyte comprenant alors le mélange en étape (iii) d'au moins un polycarbonate synthétisé selon l'invention, d'au moins un sel de métal alcalin ou alcalino-terreux, par exemple d'un sel de lithium et, en outre, d'au moins une charge inorganique conductrice du ou des cations alcalin ou alcalino-terreux, en particulier conductrice d'ions lithium.

Les charges conductrices d'ions lithium peuvent être par exemple choisies parmi les oxydes lithiés, tels que $Li_7La_3Zr_2O_{12}$ (LLZO) et $Li_{0.33}La_{0.56}TiO_3$ (LLTO), $Li_{1.3}Al_{0.3}Ti_{1.7}(PO_4)_3$ (LATP), etc.

Il peut encore s'agir de charges choisies parmi :

- les grenats, par exemple choisis parmi le $Li_7La_3Zr_2O_{12}$, le $Li_6La_2BaTa_2O_{12}$, etc. ;
- les phosphates lithiés, par exemple choisi parmi le $Li_3PO_4$, le $LiPO_3$, etc. ;
- les borates lithiés, par exemple choisi parmi le $Li_3BO_3$, etc. ;
- les oxynitrures, par exemple choisis parmi $Li_3PO_{4-x}N_{2x/3}$, $Li_4SiO_{4-x}N_{2x/3}$, $Li_4GeO_{4-x}N_{2x/3}$ avec $0<x<4$ ou $Li_3BO_{3-x}N_{2x/3}$ avec $0<x<3$ ;
- les composés lithiés à base d'oxynitrure de lithium et de phosphore (appelés LiPON) ;
- les silicates, par exemple $Li_2Si_2O_5$.

La ou lesdites charges inorganiques conductrices d'ions peuvent être mises en œuvre dans un rapport volumique charge(s) conductrice(s)/polycarbonate(s) compris entre 20/80 et 80/20, en particulier entre 20/80 et 60/40.

Le mélange du ou desdits polycarbonates selon l'invention, du ou desdits sels de métal alcalin ou alcalino-terreux et, éventuellement, de la ou desdits charges inorganiques conductrices, est plus particulièrement opéré dans des conditions permettant une bonne dispersion desdits sels de métal alcalin ou alcalino-terreux et, éventuellement, de la ou desdits charges inorganiques conductrices, au niveau des polycarbonates selon l'invention. Le mélange peut être opéré en présence ou non d'un solvant.

L'électrolyte solide en étape (iv) du procédé de l'invention, en particulier sous la forme d'un film, peut être formé, en l'absence de solvant, à partir dudit mélange de l'étape (iii) à l'état fondu, en particulier par extrusion ; ou en présence d'un ou plusieurs solvant(s), par dépôt dudit mélange de l'étape (iii) en surface d'un substrat, par exemple par enduction, suivie de l'évaporation du ou desdits solvants.

Selon une première variante de réalisation, l'électrolyte solide est préparé par voie « solvant ». Dans le cadre de cette variante, le mélange du ou desdits polycarbonates selon l'invention, du ou desdits sels de métal alcalin ou alcalino-terreux et, éventuellement, de la ou desdits charges inorganiques conductrices, est plus particulièrement réalisé dans un milieu solvant. Le milieu solvant peut être formé d'un ou plusieurs solvants organiques polaires. A titre d'exemples, ils peuvent être choisis parmi l'acétone, l'acétonitrile (ACN), le tétrahydrofurane (THF) et leurs mélanges, en particulier l'acétone ou l'acétonitrile.

L'électrolyte solide peut être formé par dépôt dudit mélange en surface d'un substrat, par exemple par enduction, suivi de l'évaporation du ou desdits solvants, en particulier pour obtenir un électrolyte ou film « sec ».

Par « sec », on entend signifier que l'électrolyte solide ou film d'électrolyte solide comprend moins de 0,1 % massique de solvant, en particulier moins de 0,05 % massique et plus particulièrement moins de 0,02 % massique de solvant.

L'évaporation du ou desdits solvants peut être par exemple opérée par chauffage à une température, dépendante du type de polymère, supérieure ou égale à 20°C sous vide, en particulier comprise entre 30 et 80 °C sous vide.

L'évaporation peut être opérée sous vide.

Selon une autre variante de réalisation, le film d'électrolyte solide est préparé en l'absence de solvant, par voie « fondue », notamment par extrusion.

Dans le cadre de cette variante de réalisation, le mélange à l'état fondu peut être plus particulièrement opéré par chauffage à une température supérieure à Tg + 30°C, où Tg est la température de transition vitreuse du (co)polymère. En particulier, le mélange est opéré à une température supérieure ou égale à 30°C, en particulier comprise entre 40°C et 60°C.

Le mélange à l'état fondu peut ensuite être mis sous la forme d'un film, supporté par un substrat ou autosupporté, par toute technique d'extrusion par voie fondue connue de l'homme du métier.

Ainsi, selon un mode de réalisation particulièrement avantageux, la préparation d'un électrolyte solide selon le procédé de l'invention s'affranchit totalement de l'usage de solvant.

Comme évoqué précédemment, l'électrolyte solide peut être préparé sous la forme d'un film ou d'une membrane d'électrolyte directement en surface d'un substrat adapté, en particulier inerte.

Le substrat peut être de diverses natures. Il peut être en verre, en alumine, en silicone, en polyimide, en polytétrafluoroéthylène (PTFE), en polytéréphtalate d'éthylène (PET), en silicone ou encore en polypropylène.

Le film d'électrolyte solide peut être éventuellement désolidarisé du substrat pour être mis en œuvre au niveau du système électrochimique auquel il est destiné, en particulier transféré sur au moins une électrode.

Le film d'électrolyte solide peut présenter par exemple une épaisseur comprise entre 20 et 500 $\mu$m, en particulier entre 20 et 100 $\mu$m et plus particulièrement entre 40 et 60 $\mu$m.

## SYSTEME ELECTROCHIMIQUE

L'électrolyte solide obtenu selon l'invention, notamment de type SPE ou HSE, peut être avantageusement mis en œuvre comme électrolyte solide dans un système électrochimique. L'invention concerne encore, selon un autre de ses aspects, un système électrochimique comprenant un électrolyte solide, en particulier un film d'électrolyte solide selon l'invention, en particulier faisant office à la fois de conducteur ionique et séparateur entre les électrodes positive et négative.

Le système électrochimique peut être un système générateur, convertisseur ou de stockage électrochimique. Il peut s'agir plus particulièrement d'une pile à combustible, par exemple une batterie primaire ou secondaire, par exemple une batterie au lithium, sodium, magnésium, potassium ou calcium, d'une batterie à flux (« redox flow battery » en terminologie anglo-saxonne) ; un accumulateur lithium-air, lithium-soufre.

Selon un mode de réalisation particulier, l'électrolyte solide est mis en œuvre dans une batterie rechargeable, en particulier dans une batterie au lithium, notamment une batterie lithium-ion ou lithium-métal.

En particulier, l'invention concerne encore, selon un autre de ses aspects, un ensemble électrode/membrane électrolytique, comprenant une membrane d'électrolyte solide selon l'invention.

Un système électrochimique selon l'invention comporte, d'une manière générale, au moins une électrode positive et une électrode négative entre lesquelles se trouve un film d'électrolyte solide agissant à la fois comme conducteur ionique et séparateur entre les électrodes positive et négative.

L'électrode positive d'une batterie au lithium comprend généralement, en tant que matière électrochimiquement active, des composés lamellaires, tels que $LiCoO_2$, $LiNiO_2$ et mixtes $Li(Ni, Co, Mn, Al)O_2$, ou des composés de structure spinelle de compositions proches de $LiMn_2O_4$, des phosphates du lithium, en particulier $LiFePO_4$ ou $LiMnFePO_4$.

De manière avantageuse, l'électrode positive comprend, en tant que matière électrochimiquement active, du $LiNi_{1/3}Mn_{1/3}Co_{1/3}O_2$ (cathodes NCM) ou du $LiCoO_2$, de préférence du $LiNi_{1/3}Mn_{1/3}Co_{1/3}O_2$.

L'électrode négative comprend généralement, en tant que matière électrochimiquement active, du lithium métal ou un alliage à base de lithium dans le cas des accumulateurs primaires, ou des matériaux d'intercalation tels que le

carbone graphite, ou de l'oxyde de titane lithié ($Li_4Ti_5O_{12}$) ou de l'oxyde de titane et de niobium ($TiNb_2O_7$), dans le cas des accumulateurs basés sur la technologie lithium-ion.

De manière avantageuse, il peut s'agir d'une batterie lithium-métal, comprenant une électrode en lithium métallique $Li^0$ et une électrode comprenant du $LiNi_{1/3}Mn_{1/3}Co_{1/3}O_2$ ou du $LiCoO_2$, de préférence du $LiNi_{1/3}Mn_{1/3}Co_{1/3}O_2$.

L'invention va maintenant être décrite au moyen des exemples suivants, donnés bien entendu à titre illustratif et non limitatif de l'invention.

**Exemple**

Dans les exemples qui suivent, les produits suivants sont utilisés.

Pour la synthèse des (co)polymères :

Le triméthylène carbonate (TMC, 99,5 %, Actu-All Chemicals) séché sous vide à 40°C avant son utilisation ; l'ε-caprolactone (CL, 97 %) ; le 3-phénylpropanol (PPA, 98 %) ; l'éthylène glycol (EG, 99.8%) ; l'octanoate stanneux ($Sn(Oct)_2$, 92,5-100%) ; le chlorure de benzoyle (BC, 99%) ; l'isocyanate de p-toluènesulfonyle (TSI, >98%), commercialisé par Sigma Aldrich, sont utilisés tels quels; la triéthylamine (TEA, >99%, Alfa Aesar) est utilisée telle quelle ; le dichlorométhane (DCM, HPLC grade, Sigma Aldrich) est distillé avec l'hydrure de calcium ($CaH_2$) avant usage ; le méthanol (MeOH, HPLC grade) ; le toluène anhydre, commercialisés par Sigma Aldrich, sont utilisés tels quels.

Pour la préparation des électrolytes :

Le sel de lithium, bis(trifluorométhanesulonyl)imide de lithium (LiTFSI, 99,9 %, Sigma Aldrich), est séché sous vide à 150 °C pendant 72 heures et stockés dans une boîte à gants remplie avec de l'argon. L'acétone anhydre (≥ 99,8 %, Sigma Aldrich) est utilisée tel quel.

**Exemple 1**

**Synthèse des homopolymères PTMC**

**<u>1.1. Synthèse du PTMC par ROP sous irradiation micro-ondes, initiée par le PPA, sans catalyseur, en présence d'un milieu solvant</u>**

Le protocole suivant est suivi pour la synthèse par ROP, en milieu solvant, sous irradiation micro-ondes, sans catalyseur, et initiée par un mono-alcool (le PPA), de PTMC, de masse moléculaire théorique de 10 000 $g.mol^{-1}$.

Le monomère TMC (10,000 g ; 97,95 mmol, 96,62 équivalents) et l'initiateur PPA (136,7 μL, 1,01 mmol, 1 équiv.) sont introduits dans un réacteur XP1500 PTFE dans une boîte à gants remplie avec de l'argon. Une petite quantité de toluène anhydre (1 mL/10 g TMC) est ajoutée au mélange réactionnel avant application de l'irradiation micro-onde.

Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 minutes, avec une contrainte de puissance limité à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le PTMC, obtenu sous la forme d'une gomme blanche, noté « MW10PPA-T », est séché sous vide à 80 °C pendant 48 heures.

Le même protocole de synthèse est suivi pour la synthèse d'un polymère PTMC de masse moléculaire théorique d'environ 50 000 $g.mol^{-1}$, noté « MW50PPA-T », en mettant en œuvre les quantités suivantes de réactifs : TMC (10,000 g, 97,95 mmol ; 488,43 équivalents) et PPA (27,0 μL, 0,20 mmol, 1 équiv.).

Le schéma réactionnel pour la synthèse du MW10PPA-T est représenté ci-dessous.

[Chem 8]

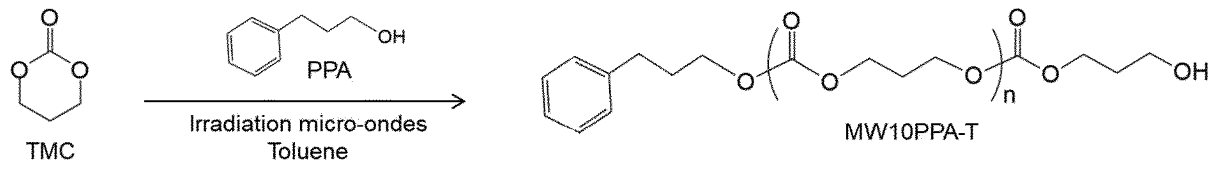

### 1.2. Synthèse du PTMC par ROP sous irradiation micro-ondes, initiée par le PPA, sans catalyseur, et en l'absence de solvant

Le protocole suivant est suivi pour la synthèse en masse (sans milieu solvant) par ROP, sous irradiation micro-ondes, sans catalyseur, et initiée par un mono-alcool (le PPA), de PTMC, de masse moléculaire théorique de 10 000 $g.mol^{-1}$.

Le monomère TMC (10,000 g ; 97,95 mmol, 96,62 équivalents) et l'initiateur PPA (136,7 μL, 1,01 mmol, 1 équiv.) sont introduits dans un réacteur XP1500 PTFE dans une boîte à gants remplie avec de l'argon.

Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 minutes, avec une contrainte de puissance limité à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le PTMC, obtenu sous la forme d'une gomme blanche, noté « MW10PPA », est séché sous vide à 80 °C pendant 48 heures.

Le même protocole de synthèse est suivi pour la synthèse d'un polymère PTMC de masse moléculaire théorique d'environ 50 000 $g.mol^{-1}$, noté « MW50PPA », en mettant en œuvre les quantités suivantes de réactifs : TMC (10,000 g, 97,95 mmol ; 488,43 équivalents) et PPA (27,0 μL, 0,20 mmol, 1 équiv.).

Le schéma réactionnel pour la synthèse du MW10PPA est représenté ci-dessous.

[Chem 9]

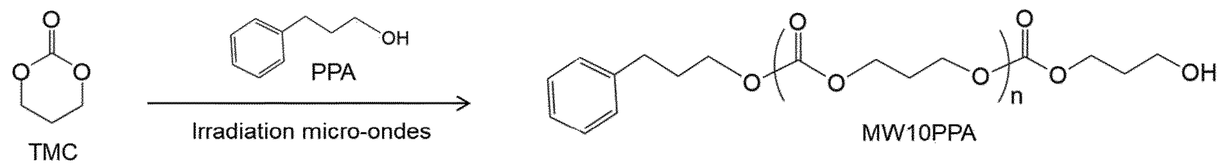


### 1.3. Synthèse du PTMC par ROP sous irradiation micro-ondes, sans ajout d'initiateur, sans catalyseur, sans solvant

Le protocole suivant est suivi pour la synthèse en masse (sans milieu solvant) par ROP, sous irradiation micro-ondes, sans catalyseur, de PTMC, de masse moléculaire théorique de 10 000 $g.mol^{-1}$. Aucun initiateur n'est ajouté au milieu réactionnel de départ. La ROP est initié par l'eau résiduelle apportée par le monomère.

Le monomère TMC (10,000 g ; 97,95 mmol) est introduits dans un réacteur XP1500 PTFE dans une boîte à gants remplie avec de l'argon.

Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 ou 120 minutes, avec une contrainte de puissance limité à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le PTMC, obtenu sous la forme d'une gomme blanche, noté « MWx », est séché sous vide à 80 °C pendant 48 heures.

Le schéma réactionnel pour la synthèse du MWx est représenté ci-dessous.

[Chem 10]

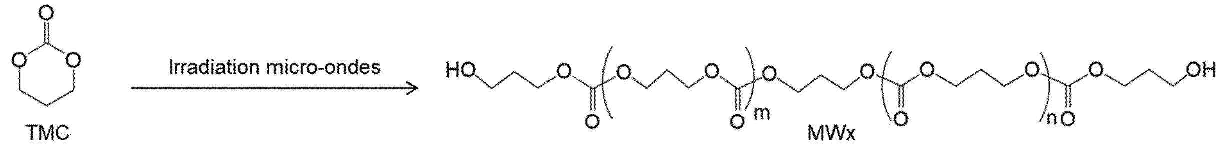

1.4. Protection du PTMC à l'aide de différents **agents** de protection

Dans une procédure typique, MW10PPA-T (0,001 mol, 1 équiv.) a été introduit dans un ballon à fond rond à un col de 100 mL équipé d'un agitateur magnétique dans une boîte à gants remplie d'argon. Ensuite, le DCM distillé (20 mL) a été ajouté pour dissoudre le polymère. Pour la protection avec chlorure de benzoyle (BC), TEA (1,395 mL, 0,01 mol, 10 équiv.) et BC (1,162 mL, 0,01 mol, 10 équiv.) ont été introduits et la réaction a été laissée se dérouler à température ambiante pendant 48 heures. Pour la protection avec isocyanate de p-toluènesulfonyle (TSI), le TSI (1,528 mL, 0,01 mol, 10 équiv.) a été introduit et la réaction a été laissée se dérouler à température ambiante pendant 48 heures. Ensuite, le mélange réactionnel a été introduit goutte à goutte dans 300 ml de méthanol pour précipiter le polymère et réagir avec l'agent protecteur résiduel. Le polymère obtenu a été lavé avec du méthanol jusqu'à ce qu'aucune trace de benzoate de méthyle ne soit détectée par RMN $^1$H. Le produit final a été séché sous vide à 80 °C pendant 48 h et stocké dans une boîte à gants. Le schéma réactionnel pour la protection du MW10PPA-T est représenté ci-dessous.

[Chem 11]

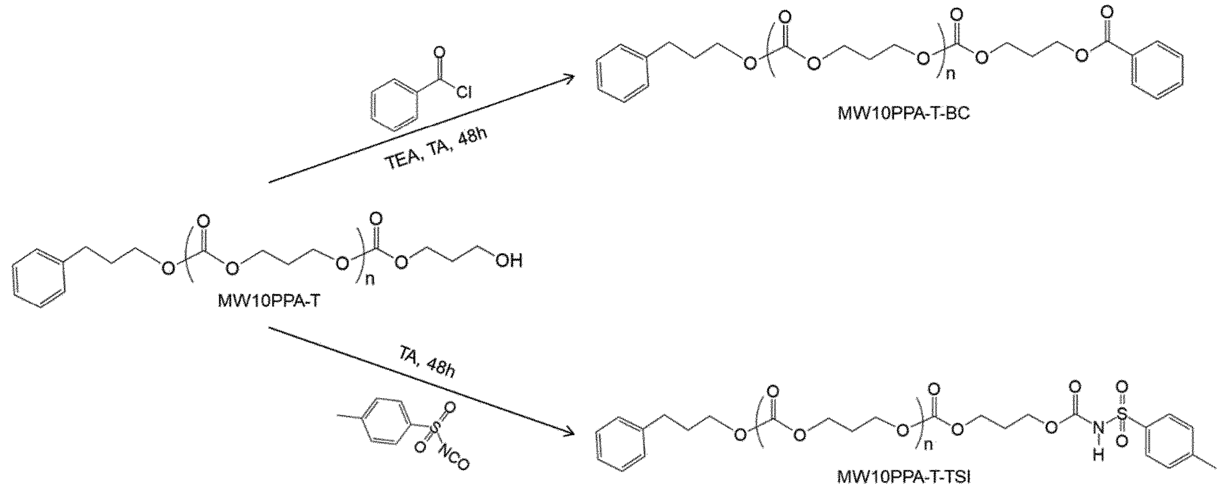


**1.5. Synthèse du PTMC mettant en œuvre $Sn(Oct)_2$ comme catalyseur *(comparatif)***

Le protocole suivant est suivi pour la synthèse par ROP, mettant en œuvre le catalyseur $Sn(Oct)_2$ et initiée par un mono-alcool (le PPA), de PTMC, de masse moléculaire théorique de 10 000 g.mol$^{-1}$.

Le monomère TMC (10,000 g, 97,95 mmol, 96,62 équivalents), l'initiateur PPA (136,7 µL, 1,01 mmol, 1 équiv.) et 1 M de solution de catalyseur $Sn(Oct)_2$ dissous dans du toluène anhydre (20,0 µL, 2,0.10$^{-2}$ mmol ; 0,02 équiv.) sont introduits dans un ballon à fond rond à col unique de 100 mL, en opérant dans une boîte à gants remplie avec de l'argon. Le ratio molaire monomère/catalyseur est [TMC]/[$Sn(Oct)_2$] est d'environ 5000/1. Le ballon est fermé, sorti à l'extérieur et chauffé à 130°C à l'aide d'un bain d'huile sous forte agitation. La température du bain est maintenue à 130°C pendant 48 heures.

Puis le mélange réactionnel est refroidi à température ambiante et une quantité minimale de DCM est ajoutée pour dissoudre le polymère PTMC. La solution de polymère est ensuite versée dans 300 mL de méthanol sous forte agitation pour précipiter le polymère.

La masse de polymère, se présentant sous la forme d'une gomme blanche, est lavée plusieurs fois avec du méthanol pendant 24 heures, puis séchée sous vide à 80°C pendant 48 heures pour obtenir le produit final, noté « S10PPA ».

Le même protocole de synthèse est suivi pour la synthèse d'un polymère PTMC de masse moléculaire théorique d'environ 50 000 g.mol$^{-1}$, noté « S50PPA », en mettant en œuvre les quantités suivantes de réactifs : TMC (10,000 g, 97,95 mmol ; 488,43 équivalents), PPA (27,0 µL, 0,20 mmol, 1 équiv.) et une solution 1 M de catalyseur $Sn(Oct)_2$ dissous dans du toluène anhydre (20,0 µL, 2,0.10$^{-2}$ mmol, 0,1 équiv.). Le ratio molaire monomère/catalyseur est d'environ 5000/1. Le temps de réaction est augmenté à 72 heures pour atteindre une conversion de monomères élevée.

Le schéma réactionnel pour la synthèse du PTMC est représenté ci-dessous.

[Chem 12]

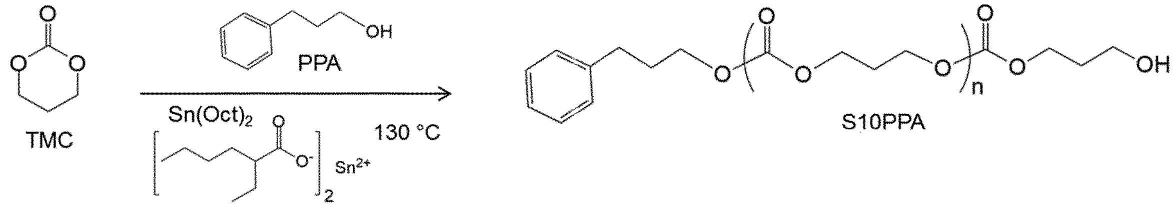


Résultats

*Méthodes de caractérisations des polymères*

Spectroscopie RMN : La structure chimique des monomères et polymères est confirmée par spectroscopie RMN sur un spectromètre RMN Bruker Ascend™ 400.

Mesure du poids moléculaire (Mw) : Les analyses par SEC-MALS (combinaison des techniques de chromatographie d'exclusion stérique et de diffusion de lumière statique) sont conduites sur un appareillage Viscotek GPCmax (VE 2001 Module) et les data sont traités par le logiciel OmniSEC, commercialisé par Malvern Panalytical. Les mesures sont opérées à température ambiante et le tétrahydrofurane (THF) est utilisé comme solvant avec une vitesse de flux de 1 $mL.min^{-1}$. Les solutions de polymères (à environ 1 $mg.mL^{-1}$) sont filtrées à travers un filtre à base de PTFE Millipore de 0,20 μm. La calibration est effectuée en utilisant des étalons de polystyrène.

Propriétés thermiques : Les mesures DSC (« Differential Scanning Calorimetry ») sont réalisées sur des films secs de ionomères en utilisation un système Chip-DSC 100 (Linseis) sous flux d'argon de 50 mL/min avec une vitesse de chauffe de $10°C.min^{-1}$ de -100 à 100°C. La température de transition vitreuse (Tg) est déterminée comme la valeur du point médian au deuxième balayage.

Résultats

Les résultats des analyses des polymères PTMC obtenus sont présentés dans le tableau 1 suivant.

[Tableau 1]

| Echantillon | Rendement (%)[a] | $M_{n\text{-}NMR}$ (Da)[b] | $M_{n\text{-}SEC}$ (Da)[c] | $M_{w\text{-}SEC}$ (Da)[c] | PDI[d] |
|---|---|---|---|---|---|
| S10PPA (*hors invention*) | 95±3 | 9700±1000 | 8700±500 | 21500±3000 | 2,45±0,05 |
| S50PPA (*hors invention*) | 95±3 | 24600±2000 | 24000±1500 | 55000±2000 | 2,31±0,05 |
| MW10PPA-T | 95±3 | 8900±1000 | 8100±1000 | 15500±3000 | 1,91±0,05 |
| MW50PPA-T | 95±3 | 21300±3000 | 22800±3000 | 50400±3000 | 2,21±0,05 |
| MW10PPA | 88±3 | 9500±1000 | 8700±1000 | 21800±2000 | 2,50±0,05 |
| MW50PPA | 90±3 | 26600±3000 | 24000±3000 | 46900±3000 | 1,96±0,05 |
| MWx | 90±3 | 10100±2000 | 13000±1500 | 23300±2000 | 1,79±0,03 |

[a] Le rendement de conversion est calculé à partir de la masse de polymère PTMC obtenu ($m_{PTMC}$) et des masses en monomère TMC et, éventuellement en initiateur PPA de départ, selon la formule

[Math 1]

$$\text{rendement (\%)} = m_{PTMC} \times 100/(m_{TMC} + m_{PPA})$$

[b] La masse moléculaire moyenne en nombre est calculée à partir de l'analyse RMN $^1H$ ;

[c] La masse moléculaire moyenne est mesurée par SEC ;

[d] Indice de polydispersité $PDI = M_w/M_n$

Les spectres RMN $^1H$ des polymères PTMC de masse moléculaire théorique moyenne Mn d'environ 10 000 $g.mol^{-1}$, synthétisés par ROP initiée par le PPA, à l'aide du catalyseur $Sn(Oct)_2$ (S10PPA) ou sans catalyseur sous irradiation par micro-ondes en présence de toluène (MW10PPA-T), et sans catalyseur sous irradiation par micro-ondes en absence de solvant (MW10PPA) sont présenté en figure 1.

Tous les spectres montrent deux pics principaux à 4,20 et 2,03 ppm correspondant respectivement au proton des groupes $-CH_2-O-$ et $-CH_2-$ du PTMC.

Le spectre du PTMC synthétisé à l'aide du catalyseur $Sn(Oct)_2$ laisse apparaître un pic d'intensité plus élevée à 3,43 ppm. Ce pic témoigne de la présence de liaisons éther ($-CH_2-O-CH_2-$) à cause de réactions indésirables de décarboxylation à haute température en présence du $Sn(Oct)_2$ [11]. Ce pic est en revanche de très faible intensité pour les PTMC synthétisés par ROP sous irradiation par micro-ondes selon l'invention. A titre de comparaison, le rapport d'intégration du pic à 3,43 ppm pour celui du pic à 4,20 ppm dans MW10PPA-T est de 5,7/1000 alors que ce rapport dans S10PPA est de 16,9/1000. Si l'on considère qu'une liaison éther dérive de la décarboxylation d'une unité TMC, la concentration molaire de liaison éther dans S10PPA est d'environ 1,67 % tandis que celle de MW10PPA-T est de 0,57 %.

Le spectre RMN $^1H$ du polymère PTMC synthétisé par ROP à l'aide de l'irradiation par micro-ondes, en absence de solvant et sans ajout d'initiateur (MWx) est présenté en figure 2.

**Exemple 2**

**Synthèse des copolymères PTCM-PCL**

**2.1. <u>Synthèse du copolymère PTMC-PCL par ROP sous irradiation micro-ondes, initiée par le PPA, sans catalyseur, en présence d'un milieu solvant</u>**

Le protocole suivant est suivi pour la synthèse par ROP, en milieu solvant, sous irradiation micro-ondes, sans catalyseur, et initiée par un mono-alcool (le PPA), de PTMC-PCL, de masse moléculaire théorique de 10 000 $g.mol^{-1}$.

Les monomères TMC (6,037 g; 59,14 mmol, 55,36 équivalents) et CL (4,500 g, 39,43 mmol, 36,91 équiv.) et l'initiateur PPA (144,0 µL, 1,07 mmol, 1 équiv.) sont introduits dans un réacteur XP1500 PTFE dans une boîte à gants remplie avec de l'argon. Une petite quantité de toluène anhydre (1 mL/10 g TMC) est ajoutée au mélange réactionnel avant application de l'irradiation micro-onde.

Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 120 minutes, avec une contrainte de puissance limité à $P_{max}$=60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le PTMC-PCL copolymère, obtenu sous la forme d'une gomme blanche, noté « M10PPA-T », est séché sous vide à 80 °C pendant 48 heures.

Le même protocole de synthèse est suivi pour la synthèse d'un polymère PTMC60-PCL40 de masse moléculaire théorique d'environ 50 000 $g.mol^{-1}$, noté « M50PPA-T », en mettant en œuvre les quantités suivantes de réactifs : TMC (6,037 g, 59,14 mmol ; 279,85 équivalents), CL (4,500 g, 39,43 mmol, 186,56 equiv.) et PPA (28,5 µL, 0,21 mmol, 1 équiv.).

Le schéma réactionnel pour la synthèse des copolymères M10PPA-T est représenté ci-dessous.

[Chem 13]

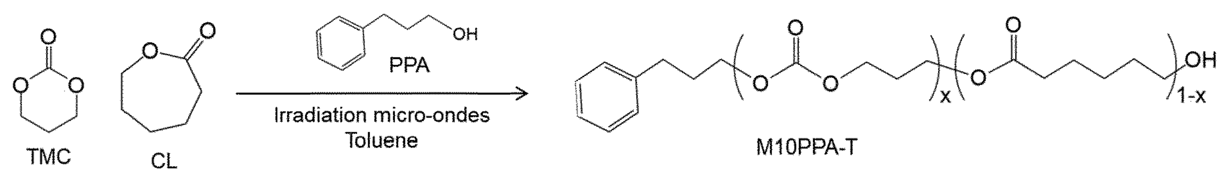


**2.2. <u>Synthèse du copolymère PTMC-PCL par ROP sous irradiation micro-ondes, initiée par PPA, sans catalyseur, en l'absence de solvant</u>**

Le protocole suivant est suivi pour la synthèse en masse (sans milieu solvant) par ROP, sous irradiation micro-ondes, sans catalyseur, et initiée par un mono-alcool (le PPA), de PTMC-PCL, de masse moléculaire théorique de 10 000 $g.mol^{-1}$.

Les monomères TMC (6,037 g ; 59,14 mmol, 55,36 équivalents) et CL (4,500 g, 39,43 mmol, 36,91 équiv.) et

l'initiateur PPA (144,0 µL, 1,07 mmol, 1 équiv.) sont introduits dans un réacteur XP1500 PTFE dans une boîte à gants remplie avec de l'argon.

Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 120 minutes, avec une contrainte de puissance limité à $P_{max}$=60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le PTMC-PCL copolymère, obtenu sous la forme d'une gomme blanche, noté « M10PPA », est séché sous vide à 80 °C pendant 48 heures.

Le même protocole de synthèse est suivi pour la synthèse d'un polymère PTMC60-PCL40 de masse moléculaire théorique d'environ 50 000 $g.mol^{-1}$, noté « M50PPA », en mettant en œuvre les quantités suivantes de réactifs : TMC (6,037 g, 59,14 mmol ; 279,85 équivalents), CL (4,500 g, 39,43 mmol, 186,56 equiv.) et PPA (28,5 µL, 0,21 mmol, 1 équiv.).

Le schéma réactionnel pour la synthèse des copolymères M10PPA est représenté ci-dessous.

[Chem 14]

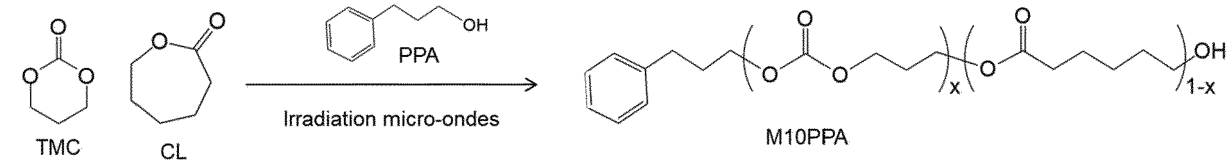


TMC CL M10PPA

### 2.3. Synthèse du copolymère PTMC-PCL mettant en œuvre $Sn(Oct)_2$ comme catalyseur *(comparatif)*

Le protocole suivant est suivi pour la synthèse par ROP, mettant en œuvre le catalyseur $Sn(Oct)_2$ et initiée par un mono-alcool (le PPA), de PTMC-PCL, de masse moléculaire théorique de 10 000 $g.mol^{-1}$.

Les monomères TMC (6,037 g, 59,14 mmol, 55,36 équivalent) et CL (CL, 4,500 g, 39, 43 mmol, 36,91 équiv.), l'initiateur PPA (144,0 µL, 1,07 mmol, 1 équiv.) et 1 M de solution de catalyseur $Sn(Oct)_2$ dissous dans du toluène anhydre (19,7 µL, $2,0.10^{-2}$ mmol, 0,02 équiv.) sont introduits dans un ballon à fond rond à col unique de 100 mL dans une boîte à gants remplie avec de l'argon. Le ratio molaire monomères/catalyseur est $[TMC + CL]/[Sn(Oct)_2]$ est d'environ 5000/1. Le ballon est fermé, sorti à l'extérieur et chauffé à 130 °C à l'aide d'un bain d'huile sous forte agitation pendant 48 heures.

Puis le mélange réactionnel est refroidi à température ambiante et une quantité minimale de DCM est ajoutée pour dissoudre le polymère PTMC. Ensuite, la solution de copolymère est versée dans 300 mL de méthanol froid sous forte agitation pour précipiter le polymère.

La masse de polymère, se présentant sous la forme d'une gomme blanche, est lavé plusieurs fois avec du méthanol, puis séchée dans un four à 60°C suivi d'un séchage sous vide à 80°C pendant 48 heures pour obtenir le produit final, noté « R10PPA ».

Le même protocole de synthèse est suivi pour la synthèse du copolymère PTMC60-PCL40 de masse moléculaire théorique de 50 000 $g.mol^{-1}$, noté « R50PPA », en mettant en œuvre les quantités suivantes de réactifs : TMC (6,037 g, 59,14 mmol ; 279,85 équivalents), CL (4,500 g, 39,43 mmol, 186,56 équiv.), PPA (28,5 µL, 0,21 mmol, 1 équiv.) et une solution 1 M de catalyseur $Sn(Oct)_2$ (19,7 µL, $2,0.10^{-2}$ mmol, 0,093 équiv.). Le ratio molaire monomères/catalyseur $[TMC + CL]/[Sn(Oct)_2]$ est d'environ 5000/1. Le temps de réaction est augmenté à 72 heures pour atteindre une conversion de monomères élevée.

Le schéma réactionnel pour la synthèse du copolymère R10PPA est représenté ci-dessous.

[Chem 15]

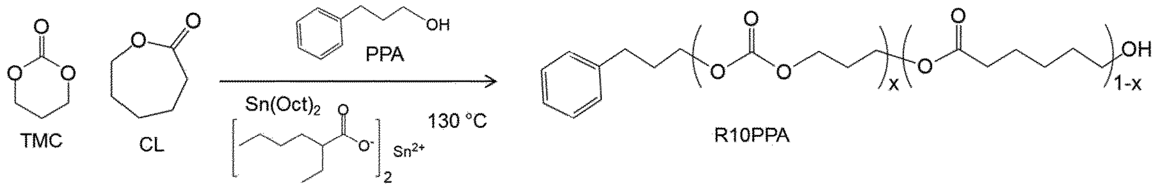


TMC CL R10PPA

Résultats

Les résultats des analyses des copolymères PTMC-PCL obtenus sont présentés dans le tableau 2 suivant.

[Tableau 2]

| Echantillon | Rendement (%)[a] | [TMC]/[CL][b] | $M_{n\text{-}SEC}$ (Da)[c] | $M_{w\text{-}SEC}$ (Da)[c] | PDId |
|---|---|---|---|---|---|
| R10PPA (*hors invention*) | 92±2 | 1,4 | 15600±1500 | 23800±2000 | 1,53±0,03 |
| R50PPA (*hors invention*) | 92±2 | 1,4 | 31300±2500 | 49200±2500 | 1,57±0,03 |
| M10PPA-T | 94±3 | 1,4 | 8700±500 | 17700±1000 | 2,03±0,03 |
| M50PPA-T | 94±3 | 1,5 | 18500±1000 | 39600±1500 | 2,14±0,03 |

[a]Le rendement de conversion est calculé à partir de la masse du copolymère PTMC-PCL obtenu ($m_{PTmC\text{-}PCL}$) et des masses en monomère TMC et en initiateur PPA de départ, selon la formule

[Math 2]

$$\text{rendement } (\%) = m_{PTMC\text{-}PCL} \times 100/(m_{TMC} + m_{CL} + m_{PPA})$$

[b]Le ratio molaire expérimental entre les monomères TMC et CL, [TMC]/[CL], est évalué par intégration des pics numérotés 7 et 11 sur les spectres d'analyse RMN $^{1}$H représentés en figure 3, comme exposé dans la publication [10] ;

[c]La masse moléculaire moyenne est mesurée par SEC ;

[d]Indice de polydispersité PDI=$M_w/M_n$.

Les spectres RMN $^1$H des copolymères PTMC60-PCL40 (10 000 g.mol$^{-1}$), synthétisés par ROP initiée par le PPA et à l'aide du catalyseur $Sn(Oct)_2$ (R10PPA), et par ROP sous irradiation par micro-ondes, sans catalyseur, en présence du toluène (M10PPA-T), sont présentés en figure 3.

Un petit pic à 3,43 ppm (figure 3(a)) peut également être observé sur le spectre RMN $^1$H de l'échantillon R10PPA, pouvant être attribué à la formation de liaison éther $-CH_2-O-CH_2-$ du fait de la dégradation thermique du polymère à haute température en présence du $Sn(Oct)_2$ [11]. En revanche, aucune trace de liaison éther n'est observée sur le spectre RMN $^1$H du copolymère M10PPA-T selon l'invention (figure 3(b)).

**Exemple 3**

**3.1. Préparation des électrolytes polymériques solides à base des polymères PTMC et copolymères PTMC-PCL**

Protocole de préparation des électrolytes à base de MW10PPA-T avec [CO]/[$Li^+$] de 15

Dans une boîte à gants remplie d'argon, 2000 g de MW10PPA-T synthétisé en exemple 1 sont introduits dans un récipient en verre équipé avec un barreau magnétique et 0,370 g de LiTFSI est ajouté. Ensuite, 5 mL d'acétone anhydre sont ajoutés, et le mélange est agité pendant au moins 4 heures pour obtenir une solution homogène. La solution est séchée à 80 °C pendant 72 heures sous vide pour obtenir l'électrolyte polymérique, noté MW10PPA-T-TFSI15.

Le ratio molaire entre les groupes carbonyle du polymère par rapport au sel de lithium, noté [CO]/[$Li^+$] est de 15.

Le même protocole est suivi pour la préparation d'électrolytes à base de MW50PPA-T, MW10PPA, MW50PPA, MWx, S10PPA, et S50PPA.

Protocole de préparation des électrolytes à base du copolymère M10PPA-T avec [CO]/[$Li^+$] de 15

Dans une boîte à gants remplie d'argon, 2000 g de copolymère M10PPA-T sont introduits dans un récipient en verre équipé d'un barreau magnétique et 0,353 g de LiTFSI est ajouté. Ensuite, 10 mL d'acétone anhydre sont ajoutés, et le mélange est agité pendant au moins 4 heures pour obtenir une solution homogène. La solution est séchée à 80 °C pendant 72 heures sous vide pour obtenir l'électrolyte polymérique, noté M10PPA-T-TFSI15.

Le même protocole est suivi pour la préparation d'électrolytes à base de M50PPA-T, M10PPA, M50PPA, R10PPA, et R50PPA.

**3.2. Evaluation des électrolytes polymériques solides**

*Méthodes de caractérisation des électrolytes*

Conductivité ionique : La conductivité ionique est déterminée par spectroscopie d'impédance électrochimique (EIS pour « Electrochemical Impedance Spectroscopy » en terminologie anglo-saxonne), en mettant en œuvre un analyseur d'impédance VMP3 (BioLogic) pour une plage de températures allant de -10°C à 80°C par paliers de 10°C. Les électrolytes sont montés dans des piles bouton sous une boite à gants remplie d'argon, entre deux électrodes de blocage en acier inoxydable. Un séparateur en PTFE (16 mm de diamètre et 60 $\mu$m d'épaisseur) comprenant un trou de 6 mm de diamètre est utilisé pour fixer la taille et la forme de l'électrolyte. Les cellules, préconditionnées à 55 °C dans un four pendant 16 heures, sont stabilisées à une température donnée pendant 2 heures avant chaque mesure, et la température est contrôlée à l'aide d'une chambre climatique (Vötsch VT4002). Les mesures en chauffage et en refroidissement sont effectuées. Les spectres d'impédance sont enregistrés dans une plage de fréquences allant de 1 Hz à 1 MHz. Les deux modes PEIS (« Potentio Electrochemical Impedance Spectroscopy », à tension appliquée contrôlée) et GEIS (« Galvano Electrochemical Impedance Spectroscopy », à courant appliqué contrôlé) sont utilisés avec une amplitude en tension ou en courant appliqué de 0,02 V ou 30 nA respectivement.

La résistance de la membrane d'électrolyte ($R_{bulk}$) est déterminée *via* l'analyse et l'interprétation du tracé de Nyquist à partir des données obtenues avec le logiciel EC-Lab. La conductivité est calculée en utilisant l'équation suivante :

[Math 3]

$$\sigma = \frac{L}{R \times S}$$

avec L représentant l'épaisseur de la membrane d'électrolyte (cm), S est la superficie de l'électrode ($cm^2$) et R est la résistance de volume (« bulk resistance ») de la membrane (ohm).

Energie d'activation : L'énergie d'activation ($E_a$) est déterminée par analyse des courbes de conductivité avec l'équation VTF (Volger-Tammann-Fulcher) en utilisation un outil Solver.

[Math 4]

$$\sigma = Ae^{\frac{-E_a}{R(T-T_0)}}$$

avec σ représentant la conductivité ionique ($S.cm^{-1}$), A= $\sigma_0 T^{-0,5}$ est le facteur pré-exponentiel dépendant de la température ($S.cm^{-1}$), $E_a$ est l'énergie d'activation ($J.mol^{-1}$), R=8,314 J. $mol^{-1}.K^{-1}$ est la constante universelle des gaz parfaits ; $T_0$=$T_g$-50 et T est la température en Kelvin (K).

L'extrapolation des courbes suivant l'équation VTF a été réalisé seulement sur les courbes de refroidissement, et les températures de transition vitreuse (Tg) du PTMC et du copolymère fixées à -27°C et à -35°C, respectivement.

Nombre de transport des ions $Li^+$: Le nombre de transport des ions $Li^+$ (t+) est mesuré à 60°C par EIS *via* un analyseur d'impédance VMP3 (BioLogic) sur des cellules boutons Li/électrolyte/Li symétriques en utilisant la méthode connue de Bruce et Vincent [10]. En particulier, t+ est calculé en utilisation l'équation suivante.

[Math 5]

$$t_+ = \frac{I_{ss}(\Delta V - I_0 R_0)}{I_0(\Delta V - I_{ss} R_{ss})}$$

avec ΔV représentant le potentiel appliqué à travers la cellule, $I_0$ et $I_{SS}$ sont les courants initial et de repos tandis que $R_0$ et $R_{SS}$ sont les résistances initiale et de repos des couches de stabilisation.

Stabilité électrochimique : La stabilité électrochimique des membranes d'électrolyte est évaluée par voltampérométrie cyclique (CV) dans une pile bouton comprenant l'électrolyte intercalé entre une feuille de lithium métallique comme contre-électrode et une feuille de cuivre (Cu) ou d'aluminium revêtue de carbone (Al@C) comme électrode de travail. Un séparateur PTFE comme décrit précédemment est utilisé pour fixer la taille et la forme de l'électrolyte.

Pour déterminer la stabilité anodique, des demi-cellules Li/SPE/Al@C ont été utilisées. Les cellules ont été montées dans une boite à gants remplie d'argon, et soumises à des mesures en voltampérométrie cyclique en utilisant un VMP3 (BioLogic) avec une vitesse de balayage de 0,1 $mV.s^{-1}$ de 2,8 à 4,5 V et jusqu'à raison de 10 cycles.

Pour déterminer la stabilité cathodique, des demi-cellules Li/SPE/Cu ont été soumises à des mesures CV en appliquant une vitesse de balayage de 0,1 $mV.s^{-1}$ de 2,0 jusqu'à -0,5 V et répéter jusqu'à 10 cycles.

Résultats

Les performances, en termes de conductivité ionique (σ), de nombre de transport des ions $Li^+$ (t+), de conductivité de l'ion $Li^+$ et d'énergie d'activation ($E_a$), des différents électrolytes polymériques à base de PTMC et PTMC-PCL copolymères synthétisés sont rassemblées dans le tableau 3 suivant.

[Tableau 3]

| Echantillon | $\sigma^{a,b}$ ($S\ cm^{-1}$) | $t_+^b$ | $Li^+$ $\sigma^c$ ($S\ cm^{-1}$) | $E_a$ ($kJ\ mol^{-1}$) |
|---|---|---|---|---|
| s10PPA-TFSI15 | $1,81 \times 10^{-5}$ | $0,70 \pm 0,02$ | $1,27 \times 10^{-5}$ | 11,25 |
| MW10PPA-T-TFSI15 | $2,37 \times 10^{-5}$ | $0,70 \pm 0,02$ | $1,66 \times 10^{-5}$ | 10,55 |
| MW50PPA-T-TFSI15 | $3,52 \times 10^{-6}$ | $0,71 \pm 0,02$ | $2,50 \times 10^{-6}$ | 12,95 |
| | | | | |
| R10PPA-TFSI15 | $2,55 \times 10^{-5}$ | $0,67 \pm 0,03$ | $1,71 \times 10^{-5}$ | 9,12 |
| R50PPA-TFSI15 | $1,85 \times 10^{-5}$ | $0,68 \pm 0,03$ | $1,26 \times 10^{-5}$ | 9,66 |
| M10PPA-T-TFSI15 | $4,72 \times 10^{-5}$ | $0,50 \pm 0,03$ | $2,36 \times 10^{-5}$ | 9,18 |

(suite)

| Echantillon | $\sigma^{a,b}$ (S $cm^{-1}$) | $t_+^b$ | $Li^+$ $\sigma^c$ (S $cm^{-1}$) | $E_a$ (kJ $mol^{-1}$) |
|---|---|---|---|---|
| M50PPA-T-TFSI15 | $1,68 \times 10^{-5}$ | $0,68 \pm 0,03$ | $1,14 \times 10^{-5}$ | 10,51 |
| [a]valeurs ajustées. [b]mesuré à 60 °C. [c]conductivité des ions $Li^+$ obtenue en normalisant la conductivité ionique totale avec le nombre de transport, t+, des ions $Li^+$ | | | | |

Les courbes de conductivité ionique en fonction de la température, obtenues pour les électrolytes polymériques solides à base de PTMC, initié par PPA et synthétisés, en exemple 1, à l'aide de l'irradiation par micro-ondes en présence du toluène (MW10PPA-T) et à l'aide du catalyseur $Sn(Oct)_2$ (S10PPA) avec le ratio [CO]/[$Li^+$] = 15, sont présentées en figure 4. Les SPEs basés sur le PTMC synthétisé par irradiation micro-ondes (MW10PPA-T-TFSI15) montrent une conductivité plus élevée à basses températures que celle du SPE basé sur le PTMC synthétisé utilisant un catalyseur $Sn(Oct)_2$ (S10PPA-TFSI15) bien que deux d'entre eux aient un nombre t+ similaire.

Les courbes de conductivité ionique en fonction de la température, obtenues pour les électrolytes polymériques solides à base de copolymère PTMC60-PCL40, initié par PPA et synthétisés, en exemple 2, à l'aide de l'irradiation par micro-ondes (M10PPA-T) et du catalyseur $Sn(Oct)_2$ (R10PPA) avec le ratio [CO]/[$Li^+$] = 15, sont présentées en figure 5. De même, les SPEs basés sur le PTMC-PCL copolymère synthétisé par irradiation micro-ondes (M10PPA-T-TFSI15) montrent une conductivité plus élevée que celle du SPE basé sur le copolymère synthétisé utilisant un catalyseur $Sn(Oct)_2$ (R10PPA-TFSI15).

Les courbes de voltampérométrie cyclique obtenues pour les électrolytes MW10PPA-T-TFSI15 et S10PPA-TFSI15, sont présentées en figure 6.

Les résultats obtenus révèlent que la stabilité anodique du PTMC dépend fortement de la méthode de synthèse. En particulier, le PTMC synthétisé à l'aide d'un four à micro-ondes sans catalyseur (MW10PPA) est beaucoup plus stable que le PTMC synthétisé à l'aide d'un catalyseur $Sn(Oct)_2$ (S10PPA). La faible stabilité à l'oxydation du S10PPA serait due au fait que le catalyseur $Sn(Oct)_2$ reste dans l'échantillon et par des défauts dans la structure chimique.

Les courbes de voltampérométrie cyclique obtenues pour les électrolytes M10PPA-T-TFSI15 et R10PPA-TFSI15, sont présentées en figure 7. La méthode de synthèse joue également un rôle important dans les propriétés de transport des électrolytes copolymères. Les résultats des courbes de voltampérométrie révèlent une stabilité à l'oxydation plus élevée du copolymère synthétisé en utilisant un four à micro-ondes que celui obtenu en utilisant un catalyseur $Sn(Oct)_2$. De même, la faible stabilité à l'oxydation du R10PPA serait due au fait que le catalyseur $Sn(Oct)_2$ reste dans l'échantillon et par des défauts dans la structure chimique.

La figure 8 présente les courbes de voltampérométrie cyclique des électrolytes à base du PTMC « non-protégé » (MW10PPA-T-TFSI15) et du polymère « protégé » avec le chlorure de benzoyle (MW10PPA-T-BC-TFSI15). Les résultats révèlent une amélioration de la stabilité électrochimique du polymère protégé. En particulier, le copolymère protégé est plus stable au contact de l'anode de lithium

**Liste des documents cités**

[1] Tominaga et al., Polymer, 2010, 51 (19), 4295-4298 ;
[2] Wang et al., Coor. Chem. Rev. 2018, 372, 85-100 ;
[3] Kimura et al., Ionics, 2015, 21(3), 895-900 ;
[4] Brandell et al., Solid State Ionics 2014, 262, 738-742 ;
[5] Mindermark et al., Polymer 63 (2015) 91-98 ;
[6] Mecerreyes et al., Electrochimica Acta 237 (2017) 259-266 ;
[7] Liao et al., Eur. Polym. J. 2007, 43(10), 4289-4296 ;
[8] Liao et al., React. Funct. Polym. 2008, 68(3), 751-758 ;
[9] Tominaga et al., Electrochim. Acta 2019, 302, 286-290 ;
[10] Evans, Polymer, 1987, 28 (13), 2324-2328 ;
[11] Zhu et al., Polym. Degrad. Stabl. 2012, 97(9), 1589-1595.


**Revendications**

1. Procédé de préparation d'un électrolyte solide, en particulier de type électrolyte polymérique solide (SPE) ou électrolyte solide hybride (HSE), destiné à un système électrochimique, en particulier à une batterie rechargeable,

comprenant au moins les étapes suivantes :

(i) synthèse d'au moins un (co)polymère par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé, dit initiateur, comportant une ou plusieurs fonction(s) hydroxyle(s) ;
(ii) éventuellement, protection des fonctions hydroxyles en bout de chaîne du ou desdits (co)polymères ;
(iii) mélange, en présence ou non d'un milieu solvant, du ou desdits (co)polymères obtenus en étape (i) ou (ii), avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des ions lithium ; et
(iv) formation, en particulier en surface d'un substrat, d'un électrolyte solide à partir dudit mélange.

**2.** Procédé selon la revendication précédente, dans lequel l'irradiation par micro-ondes en étape (i) est opérée à une puissance inférieure ou égale à 300 W, en particulier comprise entre 30 et 300 W et plus particulièrement comprise entre 40 et 100 W.

**3.** Procédé selon l'une quelconque des revendications précédentes, dans lequel la température du milieu réactionnel pendant l'irradiation aux micro-ondes en étape (i) est maintenue à une valeur comprise entre 100 et 200 °C, en particulier entre 120°C et 160°C et plus particulièrement entre 120°C et 140°C.

**4.** Procédé selon l'une quelconque des revendications précédentes, dans lequel ledit initiateur est choisi parmi l'eau et/ou les alcools, en particulier les alcools présentant une à quatre fonction(s) hydroxyle(s) et plus particulièrement une ou deux fonction(s) hydroxyle(s), par exemple, le 3-phényl-1-propanol ou l'éthylène glycol.

**5.** Procédé selon l'une quelconque des revendications précédentes, dans lequel le ou lesdits initiateurs sont mis en œuvre en une quantité déterminée, en particulier telle que le rapport molaire monomère(s)/initiateur(s) est compris entre 40/1 et 1000/1, en particulier entre 50/1 et 500/1.

**6.** Procédé selon l'une quelconque des revendications précédentes, dans lequel la réaction de (co)polymérisation en étape (i) est opérée en présence d'un ou plusieurs solvant(s) organique(s), en particulier mis en œuvre en une teneur inférieure ou égale à 0,3 mL/g de monomère(s), en particulier inférieure ou égale à 0,1 mL/g de monomère(s).

**7.** Procédé selon l'une quelconque des revendications 1 à 5, dans lequel la réaction de (co)polymérisation en étape (i) est opérée en l'absence de solvant.

**8.** Procédé selon l'une quelconque des revendications précédentes, dans lequel l'étape (ii) est opérée par réaction de la ou desdites fonctions hydroxyles en bout de chaîne du ou desdits (co)polymère(s) avec au moins un composé, dit agent de protection, en particulier choisi parmi les chlorures d'acyle, par exemple le chlorure de benzoyle, le chlorure d'acétyle ; les anhydrides d'acide par exemple l'anhydride acétique et les isocyanates comme l'isocyanate de p-toluènesulfonyle.

**9.** Procédé selon l'une quelconque des revendications précédentes, dans lequel ledit (co)polymère synthétisé en étape (i) présente une masse molaire moyenne en nombre, Mn, mesurée par chromatographie par perméation de gel, inférieure ou égale à 100 000 $g.mol^{-1}$, en particulier comprise entre 5 000 et 100 000 $g.mol^{-1}$ et plus particulièrement entre 5 000 et 50 000 $g.mol^{-1}$.

**10.** Procédé selon l'une quelconque des revendications précédentes, dans lequel ledit (co)polymère en étape (i) est choisi parmi les polytriméthylène carbonate (PTMC) et les copolymères polytriméthylène carbonate-poly(ε-caprolactone) (PTMC-PCL), en particulier présentant un rapport molaire entre les unités monomériques dérivées du triméthylène carbonate et les unités monomériques dérivés de la caprolactone compris entre 90/10 et 10/90, notamment entre 80/20 et 20/80, en particulier entre 70/30 et 30/70 et plus particulièrement d'environ 60/40.

**11.** Procédé selon l'une quelconque des revendications précédentes, dans lequel ledit sel conducteur ionique mis en œuvre en étape (iii) est un sel de lithium, en particulier choisi parmi du bis(trifluorométhylsulfonyl)imide de lithium (LiTFSI), du lithium 4,5-dicyano-2-(trifluoromethyl)imidazole (LiTDI) ou du bis(fluorosulfonyl)amidure de lithium (LiFSI), de préférence du LiTFSI ou LiFSI.

**12.** Procédé selon l'une quelconque des revendications précédentes, dans lequel les quantités en (co)polymère(s) et en sel(s) de lithium en étape (iii) sont ajustées de manière à ce que le ratio molaire entre les groupes carbonyle du (co) polymère par rapport au lithium, noté [CO]/[$Li^+$], soit compris entre 0,5 et 30, en particulier entre 5 et 15 et plus particulièrement entre 10 et 15.

**13.** Procédé selon l'une quelconque des revendications précédentes, dans lequel l'électrolyte solide en étape (iv) du procédé de l'invention, en particulier sous la forme d'un film, est formé, en l'absence de solvant, à partir dudit mélange de l'étape (iii) à l'état fondu, en particulier par extrusion ; ou en présence d'un ou plusieurs solvant(s), par dépôt dudit mélange de l'étape (iii) en surface d'un substrat, par exemple par enduction, suivie de l'évaporation du ou desdits solvants.

**14.** Utilisation d'au moins un (co)polymère, obtenu par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;

et dont les fonctions hydroxyles en bout de chaîne sont protégées ;
pour former, en combinaison avec au moins un sel de métal alcalin ou alcalino-terreux, un électrolyte solide, en particulier de type électrolyte polymérique solide (SPE) ou électrolyte solide hybride (HSE), destiné à un système électrochimique, en particulier à une batterie rechargeable, notamment une batterie au lithium.

**15.** Utilisation selon la revendication précédente, ledit (co)polymère étant obtenu dans les conditions décrites dans l'une quelconque des revendications 2 à 8.

**16.** Utilisation selon la revendication 14 ou 15, ledit (co)polymère présentant une masse moléculaire moyenne en nombre, mesurée par chromatographie par perméation de gel, allant de 5 000 à 100 000 $g.mol^{-1}$ en particulier de 5 000 à 50 000 $g.mol^{-1}$.

**17.** Electrolyte solide, en particulier de type électrolyte polymérique solide (SPE) ou électrolyte solide hybride (HSE), comprenant :

- au moins un (co)polymère, obtenu par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ; et dont les fonctions hydroxyles en bout de chaîne sont protégées ;
- au moins un sel de métal alcalin ou alcalino-terreux, en particulier un sel de lithium ; et
- éventuellement au moins une charge inorganique conductrice du ou de cations alcalins ou alcalino-terreux, en particulier une charge inorganique conductrice des ions lithium.

**18.** Electrolyte solide selon la revendication précédente, ledit électrolyte solide étant obtenu par le procédé tel que défini selon l'une quelconque des revendications 1 à 13.

**19.** Système électrochimique comprenant un électrolyte solide tel que défini selon la revendication 17 ou 18, ledit système électrochimique étant plus particulièrement une batterie rechargeable, en particulier une batterie au lithium, notamment d'une batterie lithium-métal ou lithium-ion.

**Patentansprüche**

**1.** Verfahren zur Herstellung eines Festelektrolyten, insbesondere vom Typ polymerer Festelektrolyt (SPE) oder hybrider Festelektrolyt (HSE), der für ein elektrochemisches System, insbesondere eine wiederaufladbare Batterie, bestimmt ist, umfassend mindestens die folgenden Schritte:

(i) Synthese mindestens eines (Co)polymers durch ringöffnende (Co)polymerisation (ROP) mindestens eines fünf- bis achtgliedrigen zyklischen Carbonats und gegebenenfalls mindestens eines fünf- bis achtgliedrigen Lactons, wobei die (Co)polymerisationsreaktion in Abwesenheit von Katalysator, unter Mikrowellenbestrahlung durchgeführt und durch mindestens eine Verbindung, Initiator genannt, mit einer oder mehreren Hydroxylfunktion(en) eingeleitet wird;
(ii) gegebenenfalls Schützen der Hydroxylfunktionen am Kettenende des oder der (Co)polymere;
(iii) Mischen, in Gegenwart eines Lösungsmittelmediums oder nicht, des oder der aus Schritt (i) oder (ii) erhaltenen (Co)polymere mit mindestens einem Alkali- oder Erdalkalimetallsalz, insbesondere einem Lithiumsalz, und gegebenenfalls mindestens einem das oder die Alkali- oder Erdalkali-Ionen leitenden anorganischen Einsatzmaterial, insbesondere einem Lithium-Ionen leitenden anorganischen Einsatzmaterial; und
(iv) Bilden, insbesondere an der Oberfläche eines Substrats, eines Festelektrolyten ausgehend von dem Gemisch.

**2.** Verfahren nach dem vorhergehenden Anspruch, wobei die Mikrowellenbestrahlung in Schritt (i) mit einer Leistung kleiner oder gleich 300 W, insbesondere zwischen 30 und 300 W und ganz besonders zwischen 40 und 100 W, durchgeführt wird.

**3.** Verfahren nach einem der vorhergehenden Ansprüche, wobei die Temperatur des Reaktionsmediums während der Mikrowellenbestrahlung in Schritt (i) auf einem Wert zwischen 100 und 200 °C, insbesondere zwischen 120 °C und 160 °C und ganz besonders zwischen 120 °C und 140 °C, gehalten wird.

**4.** Verfahren nach einem der vorhergehenden Ansprüche, wobei der Initiator aus Wasser und/oder den Alkoholen, insbesondere den Alkoholen, die eine bis vier Hydroxylfunktion(en) und ganz besonders eine oder zwei Hydroxylfunktion(en) aufweisen, zum Beispiel 3-Phenyl-1-propanol oder Ethylenglycol, ausgewählt wird.

**5.** Verfahren nach einem der vorhergehenden Ansprüche, wobei der oder die Initiatoren in einer bestimmten Menge eingesetzt werden, die insbesondere dergestalt ist, dass das molare Verhältnis Monomer(e)/Initiator(en) zwischen 40/1 und 1000/1, insbesondere zwischen 50/1 und 500/1, liegt.

**6.** Verfahren nach einem der vorhergehenden Ansprüche, bei dem die (Co)polymerisationsreaktion in Schritt (i) in Gegenwart eines oder mehrerer organischer Lösungsmittel durchgeführt wird, die insbesondere in einem Gehalt kleiner oder gleich 0,3 ml/g Monomer(e), insbesondere kleiner oder gleich 0,1 ml/g Monomer(e), eingesetzt werden.

**7.** Verfahren nach einem der Ansprüche 1 bis 5, bei dem die (Co)polymerisationsreaktion in Schritt (i) in Abwesenheit von Lösungsmittel durchgeführt wird.

**8.** Verfahren nach einem der vorhergehenden Ansprüche, wobei der Schritt (ii) durch Reaktion der Hydroxylfunktion oder -funktionen am Kettenende des oder der (Co)polymere mit mindestens einer Verbindung, Schutzmittel genannt, die insbesondere aus den Acylchloriden, zum Beispiel dem Benzoylchlorid, dem Acetylchlorid;
den Säureanhydriden, beispielsweise dem Essigsäureanhydrid, und den Isocyanaten wie dem p-Toluolsulfonylisocyanat, ausgewählt wird, durchgeführt wird.

**9.** Verfahren nach einem der vorhergehenden Ansprüche, wobei das im Schritt (i) synthetisierte (Co)polymer eine durch Gelpermeationschromatographie gemessene zahlenmittlere Molmasse, Mn, kleiner oder gleich 100 000 $g.mol^{-1}$, insbesondere zwischen 5 000 und 100 000 $g.mol^{-1}$ und ganz besonders zwischen 5 000 und 50 000 $g.mol^{-1}$ aufweist.

**10.** Verfahren nach einem der vorhergehenden Ansprüche, wobei das (Co)polymer im Schritt (i) aus dem Polytrimethylencarbonat (PTMC) und den Polytrimethylencarbonat-Poly(ε-caprolacton)-Copolymeren (PTMC-PCL) ausgewählt wird, wobei es insbesondere ein molares Verhältnis zwischen den vom Trimethylencarbonat abgeleiteten Monomereinheiten und den vom Caprolacton abgeleiteten Monomereinheiten zwischen 90/10 und 10/90, vor allem zwischen 80/20 und 20/80, insbesondere zwischen 70/30 und 30/70 und ganz besonders von etwa 60/40 aufweist.

**11.** Verfahren nach einem der vorhergehenden Ansprüche, wobei das im Schritt (iii) eingesetzte Ionen leitende Salz ein Lithiumsalz ist, das insbesondere aus Lithiumbis(trifluormethylsulfonyl)imid (LiTFSI), Lithium-2-trifluormethyl-4,5-dicyanoimidazol (LiTDI) oder Lithiumbis(fluorsulfonyl)imid (LiFSI), bevorzugt LiTFSI oder LiFSI, ausgewählt wird.

**12.** Verfahren nach einem der vorhergehenden Ansprüche, wobei die Mengen an (Co)polymer(en) und an Lithiumsalz(en) in Schritt (iii) so eingestellt werden, dass das molare Verhältnis zwischen den Carbonylgruppen des (Co) polymers in Bezug auf das Lithium, bezeichnet als $[CO]/[Li^+]$, zwischen 0,5 und 30, insbesondere zwischen 5 und 15 und ganz besonders zwischen 10 und 15 liegt.

**13.** Verfahren nach einem der vorhergehenden Ansprüche, wobei der Festelektrolyt im Schritt (iv) des Verfahrens der

Erfindung, insbesondere in Form eines Films, ohne Lösungsmittel ausgehend von dem Gemisch des Schritts (iii) im geschmolzenen Zustand gebildet wird, insbesondere durch Extrusion; oder in Gegenwart eines oder mehrerer Lösungsmittel, durch Aufbringen des Gemisches des Schritts (iii) an der Oberfläche eines Substrats, zum Beispiel durch Bestreichen, gefolgt von dem Verdampfen des oder der Lösungsmittel.

**14.** Verwendung mindestens eines (Co)polymers, das durch ringöffnende (Co)polymerisation (ROP) mindestens eines fünf- bis achtgliedrigen zyklischen Carbonats und gegebenenfalls mindestens eines fünf- bis achtgliedrigen Lactons, wobei die (Co)polymerisationsreaktion in Abwesenheit von Katalysator, unter Mikrowellenbestrahlung durchgeführt und durch mindestens eine Verbindung mit einer oder mehreren Hydroxylfunktion(en) eingeleitet wird, erhalten wird

und dessen Hydroxylfunktionen am Kettenende geschützt sind;
um, in Kombination mit mindestens einem Alkali- oder Erdalkalimetallsalz, einen Festelektrolyten, insbesondere vom Typ polymerer Festelektrolyt (SPE) oder hybrider Festelektrolyt (HSE), zu bilden, der für ein elektrochemisches System, insbesondere für eine wiederaufladbare Batterie, insbesondere eine Lithium-Batterie, bestimmt ist.

**15.** Verwendung nach dem vorhergehenden Anspruch, wobei das (Co)polymer unter den in einem der Ansprüche 2 bis 8 beschriebenen Bedingungen erhalten wird.

**16.** Verwendung nach Anspruch 14 oder 15, wobei das (Co)polymer eine durch Gelpermeationschromatographie gemessene zahlenmittlere Molmasse von 5 000 bis 100 000 $g.mol^{-1}$, insbesondere von 5 000 bis 50 000 $g.mol^{-1}$, aufweist.

**17.** Festelektrolyt, insbesondere vom Typ polymerer Festelektrolyt (SPE) oder hybrider Festelektrolyt (HSE), umfassend:

- mindestens ein (Co)polymer, das durch ringöffnende (Co)polymerisation (ROP) mindestens eines fünf- bis achtgliedrigen zyklischen Carbonats und gegebenenfalls mindestens eines fünf- bis achtgliedrigen Lactons, wobei die (Co)polymerisationsreaktion in Abwesenheit von Katalysator, unter Mikrowellenbestrahlung durchgeführt und durch mindestens eine Verbindung mit einer oder mehreren Hydroxylfunktion(en) eingeleitet wird, erhalten wird
und dessen Hydroxylfunktionen am Kettenende geschützt sind;
- mindestens ein Alkali- oder Erdalkalimetallsalz, insbesondere ein Lithiumsalz; und
- gegebenenfalls mindestens ein das oder die Alkali- oder Erdalkali-Ionen leitendes anorganisches Einsatzmaterial, insbesondere ein Lithium-Ionen leitendes anorganisches Einsatzmaterial.

**18.** Festelektrolyt nach dem vorhergehenden Anspruch, wobei der Festelektrolyt durch das Verfahren nach einem der Ansprüche 1 bis 13 erhalten wird.

**19.** Elektrochemisches System, umfassend einen Festelektrolyten nach Anspruch 17 oder 18, wobei das elektrochemische System ganz besonders eine wiederaufladbare Batterie, insbesondere eine Lithium-Batterie, vor allem eine Lithium-Metall- oder Lithium-Ionen-Batterie ist.

## Claims

**1.** Process for the preparation of a solid electrolyte, in particular of solid polymer electrolyte (SPE) or hybrid solid electrolyte (HSE) type, intended for an electrochemical system, in particular for a rechargeable battery, comprising at least the following steps:

(i) synthesis of at least one (co)polymer by ring-opening (co)polymerization (ROP) of at least one five- to eight-membered cyclic carbonate and, optionally, of at least one five- to eight-membered lactone, said (co)polymerization reaction being carried out in the absence of catalyst, under microwave irradiation and initiated by at least one compound, referred to as initiator, comprising one or more hydroxyl function(s);
(ii) optionally, protection of the hydroxyl functions at the chain end of said (co)polymer(s);
(iii) mixing, in the presence or not of a solvent medium, of said (co)polymer(s) obtained in step (i) or (ii), with at least one alkali metal or alkaline earth metal salt, in particular a lithium salt, and, optionally, at least one inorganic filler which conducts the alkali metal or alkaline earth metal cation(s), in particular an inorganic filler which conducts lithium ions; and

(iv) formation, in particular at the surface of a substrate, of a solid electrolyte from said mixture.

2. Process according to the preceding claim, in which the microwave irradiation in step (i) is carried out at a power of less than or equal to 300 W, in particular of between 30 and 300 W and more particularly of between 40 and 100 W.

3. Process according to either one of the preceding claims, in which the temperature of the reaction medium during the microwave irradiation in step (i) is maintained at a value of between 100°C and 200°C, in particular between 120°C and 160°C and more particularly between 120°C and 140°C.

4. Process according to any one of the preceding claims, in which said initiator is chosen from water and/or alcohols, in particular alcohols having one to four hydroxyl function(s) and more particularly one or two hydroxyl function(s), for example 3-phenyl-1-propanol or ethylene glycol.

5. Process according to any one of the preceding claims, in which said initiator(s) is (are) employed in a predetermined amount, in particular such that the monomer(s)/initiator(s) molar ratio is between 40/1 and 1000/1, in particular between 50/1 and 500/1.

6. Process according to any one of the preceding claims, in which the (co)polymerization reaction in step (i) is carried out in the presence of one or more organic solvent(s), in particular employed in a content of less than or equal to 0.3 ml/g of monomer(s), in particular less than or equal to 0.1 ml/g of monomer(s).

7. Process according to any one of Claims 1 to 5, in which the (co)polymerization reaction in step (i) is carried out in the absence of solvent.

8. Process according to any one of the preceding claims, in which step (ii) is carried out by reaction of said hydroxyl function(s) at the chain end of said (co)polymer(s) with at least one compound, referred to as protecting agent, in particular chosen from acyl chlorides, for example benzoyl chloride or acetyl chloride;
acid anhydrides, for example acetic anhydride; and isocyanates, such as p-toluenesulfonyl isocyanate.

9. Process according to any one of the preceding claims, in which said (co)polymer synthesized in step (i) has a number-average molar mass, Mn, measured by gel permeation chromatography, of less than or equal to 100 000 $g.mol^{-1}$, in particular of between 5000 and 100 000 $g.mol^{-1}$ and more particularly between 5000 and 50 000 $g.mol^{-1}$.

10. Process according to any one of the preceding claims, in which said (co)polymer in step (i) is chosen from polytrimethylene carbonates (PTMCs) and polytrimethylene carbonate-poly(e-caprolactone) (PTMC-PCL) copolymers, in particular having a molar ratio of the monomer units derived from trimethylene carbonate to the monomer units derived from caprolactone of between 90/10 and 10/90, notably between 80/20 and 20/80, in particular between 70/30 and 30/70 and more particularly of approximately 60/40.

11. Process according to any one of the preceding claims, in which said ion-conductive salt employed in step (iii) is a lithium salt, in particular chosen from lithium bis(trifluoromethylsulfonyl)imide (LiTFSI), lithium 4,5-dicyano-2-(trifluoromethyl)imidazole (LiTDI) or lithium bis(fluorosulfonyl)amide (LiFSI), preferably LiTFSI or LiFSI.

12. Process according to any one of the preceding claims, in which the amounts of (co)polymer(s) and of lithium salt(s) in step (iii) are adjusted so that the molar ratio of the carbonyl groups of the (co)polymer with respect to the lithium, denoted $[CO]/[Li^+]$, is between 0.5 and 30, in particular between 5 and 15 and more particularly between 10 and 15.

13. Process according to any one of the preceding claims, in which the solid electrolyte in step (iv) of the process of the invention, in particular in the form of a film, is formed, in the absence of solvent, from said mixture of step (iii) in the molten state, in particular by extrusion; or, in the presence of one or more solvent(s), by deposition of said mixture of step (iii) at the surface of a substrate, for example by coating, followed by the evaporation of said solvent(s).

14. Use of at least one (co)polymer, obtained by ring-opening (co)polymerization (ROP) of at least one five- to eight-membered cyclic carbonate and, optionally, of at least one five- to eight-membered lactone, said (co)polymerization reaction being carried out in the absence of catalyst, under microwave irradiation and initiated by at least one compound comprising one or more hydroxyl function(s);

and of which the hydroxyl functions at the chain end are protected;

in order to form, in combination with at least one alkali metal or alkaline earth metal salt, a solid electrolyte, in particular of solid polymer electrolyte (SPE) or hybrid solid electrolyte (HSE) type, intended for an electrochemical system, in particular for a rechargeable battery, notably a lithium battery.

**15.** Use according to the preceding claim, said (co)polymer being obtained under the conditions described in any one of Claims 2 to 8.

**16.** Use according to Claim 14 or 15, said (co)polymer having a number-average molecular mass, measured by gel permeation chromatography, ranging from 5000 to 100 000 $g.mol^{-1}$, in particular from 5000 to 50 000 $g.mol^{-1}$.

**17.** Solid electrolyte, in particular of solid polymer electrolyte (SPE) or hybrid solid electrolyte (HSE) type, comprising:

- at least one (co)polymer, obtained by ring-opening (co)polymerization (ROP) of at least one five- to eight-membered cyclic carbonate and, optionally, of at least one five- to eight-membered lactone, said (co)polymerization reaction being carried out in the absence of catalyst, under microwave irradiation and initiated by at least one compound comprising one or more hydroxyl function(s);
and of which the hydroxyl functions at the chain end are protected;
- at least one alkali metal or alkaline earth metal salt, in particular a lithium salt; and
- optionally, at least one inorganic filler which conducts the alkali metal or alkaline earth metal cation(s), in particular an inorganic filler which conducts lithium ions.

**18.** Solid electrolyte according to the preceding claim, said solid electrolyte being obtained by the process as defined according to any one of Claims 1 to 13.

**19.** Electrochemical system comprising a solid electrolyte as defined according to Claim 17 or 18, said electrochemical system being more particularly a rechargeable battery, in particular a lithium battery, notably a lithium-metal or lithium-ion battery.

[Fig 1]

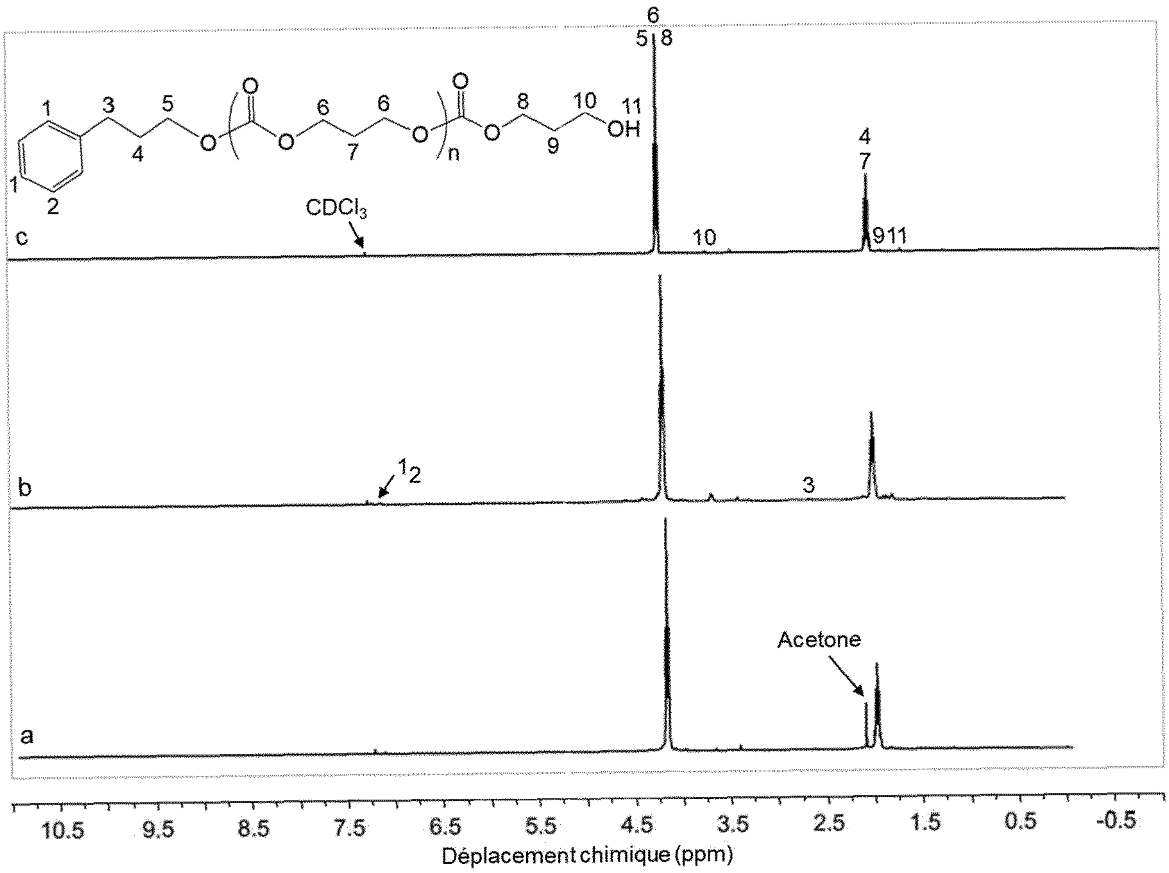
c
b
a
CDCl3
Acetone
10.5
9.5
8.5
7.5
6.5
5.5
4.5
3.5
2.5
1.5
0.5
-0.5
Déplacement chimique (ppm)

[Fig 2]

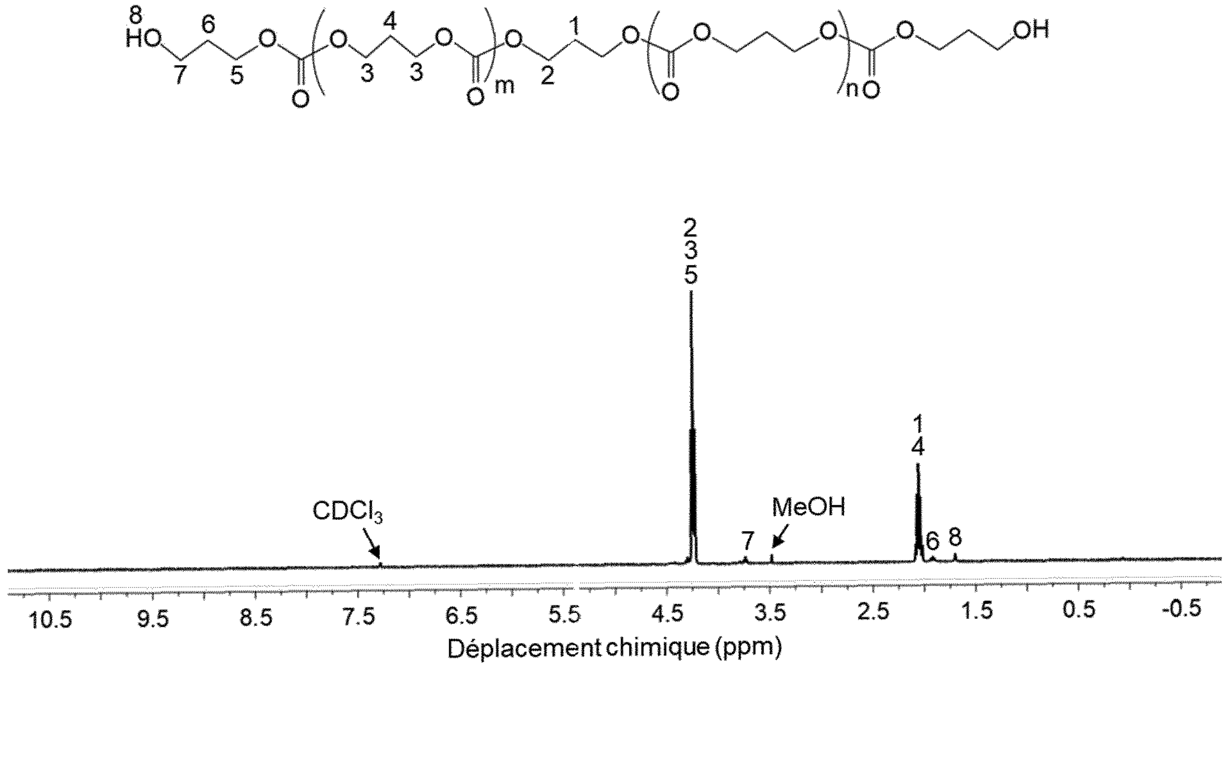
CDCl3
MeOH
10.5
9.5
8.5
7.5
6.5
5.5
4.5
3.5
2.5
1.5
0.5
-0.5
Déplacement chimique (ppm)

[Fig 3]

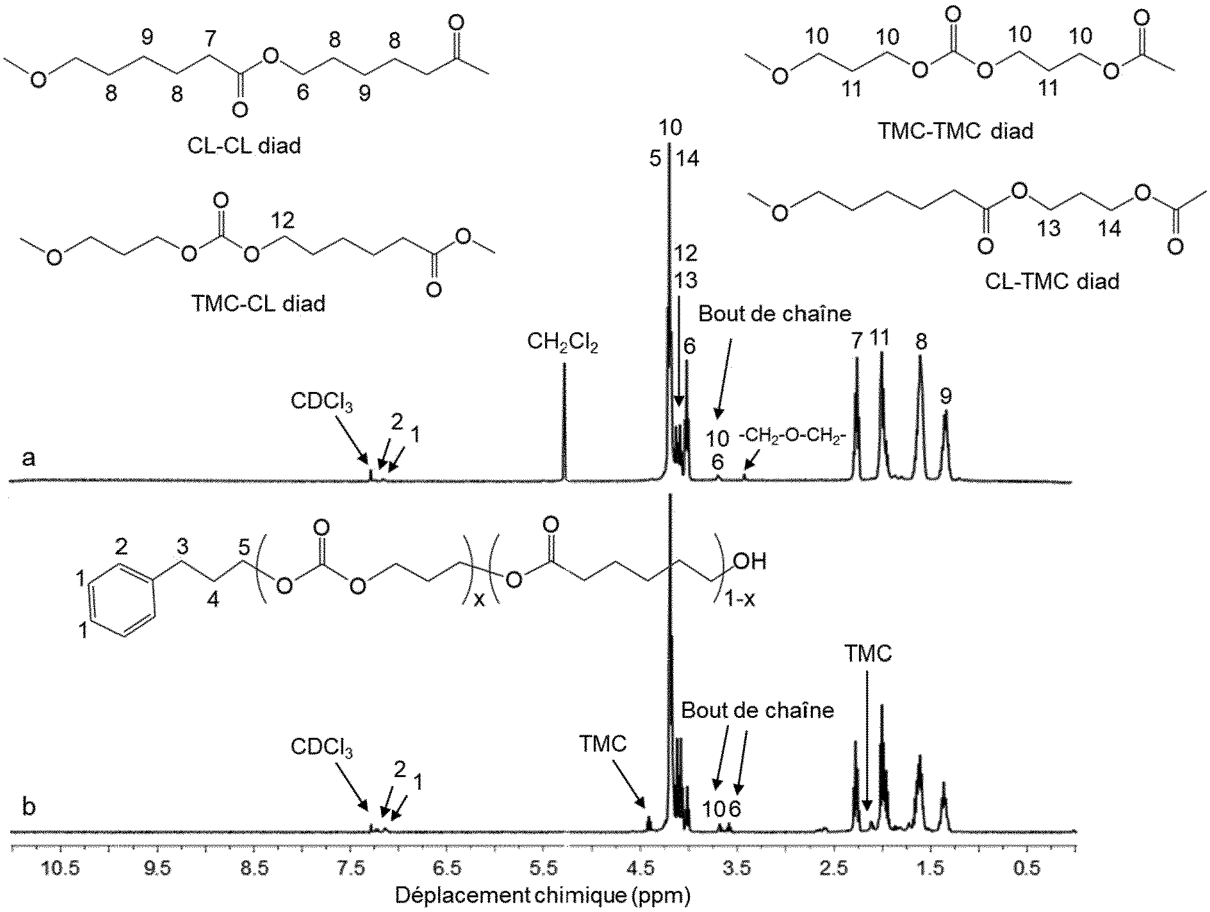
CL-CL diad
TMC-TMC diad
TMC-CL diad
CL-TMC diad
Bout de chaîne
$CH_2Cl_2$
$CDCl_3$
-CH₂-O-CH₂-
a
b
TMC
TMC
Bout de chaîne
$CDCl_3$
10.5 9.5 8.5 7.5 6.5 5.5 4.5 3.5 2.5 1.5 0.5
Déplacement chimique (ppm)

[Fig 4]

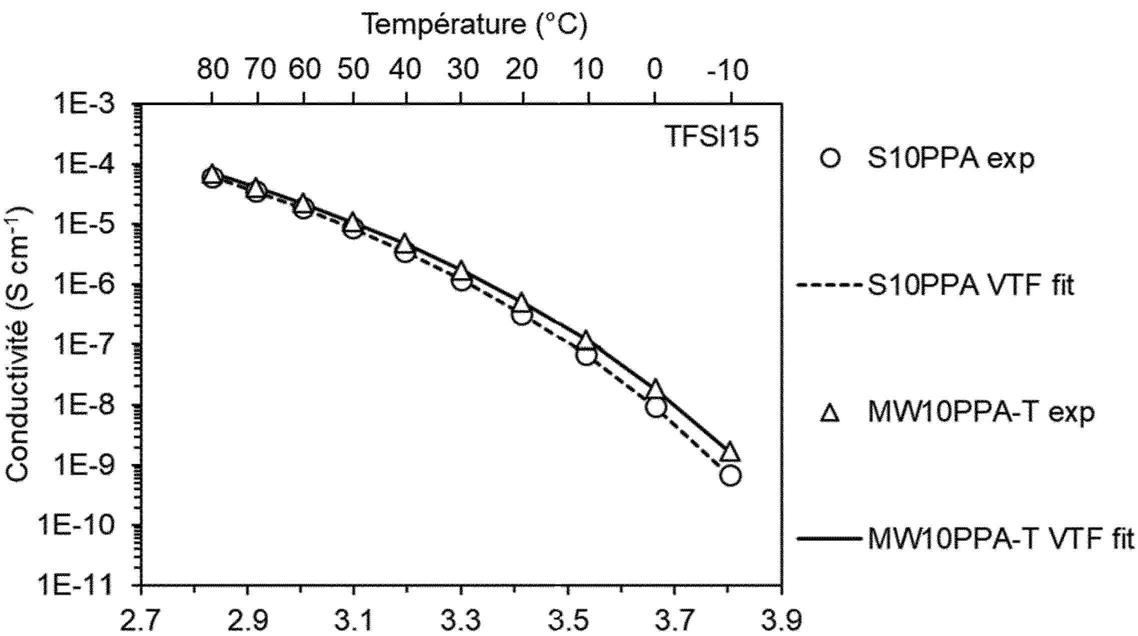
Température (°C)
80 70 60 50 40 30 20 10 0 -10
TFSI15
Conductivité (S cm⁻¹)
1E-3
1E-4
1E-5
1E-6
1E-7
1E-8
1E-9
1E-10
1E-11
2.7 2.9 3.1 3.3 3.5 3.7 3.9
1000/T (K⁻¹)
S10PPA exp
S10PPA VTF fit
MW10PPA-T exp
MW10PPA-T VTF fit

[Fig 5]

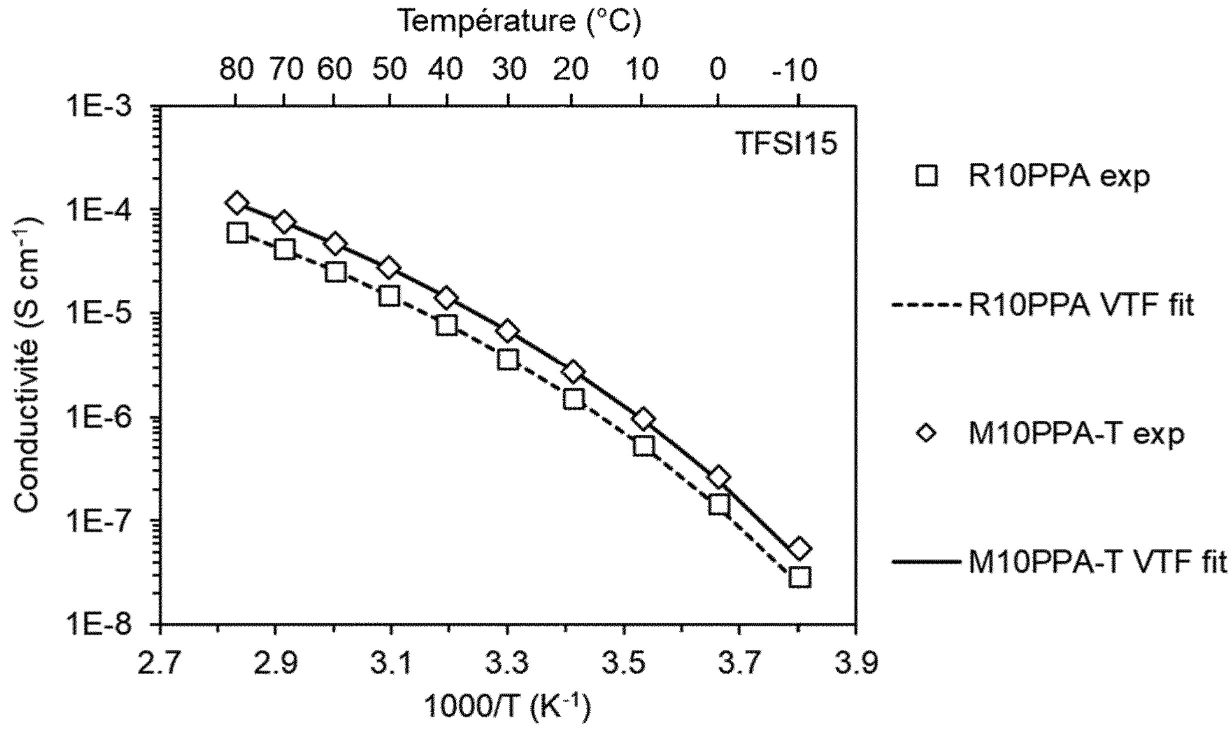
Température (°C)
80 70 60 50 40 30 20 10 0 -10
1E-3
1E-4
1E-5
1E-6
1E-7
1E-8
Conductivité (S cm-1)
TFSI15
2.7 2.9 3.1 3.3 3.5 3.7 3.9
1000/T (K-1)
R10PPA exp
R10PPA VTF fit
M10PPA-T exp
M10PPA-T VTF fit

[Fig 6]

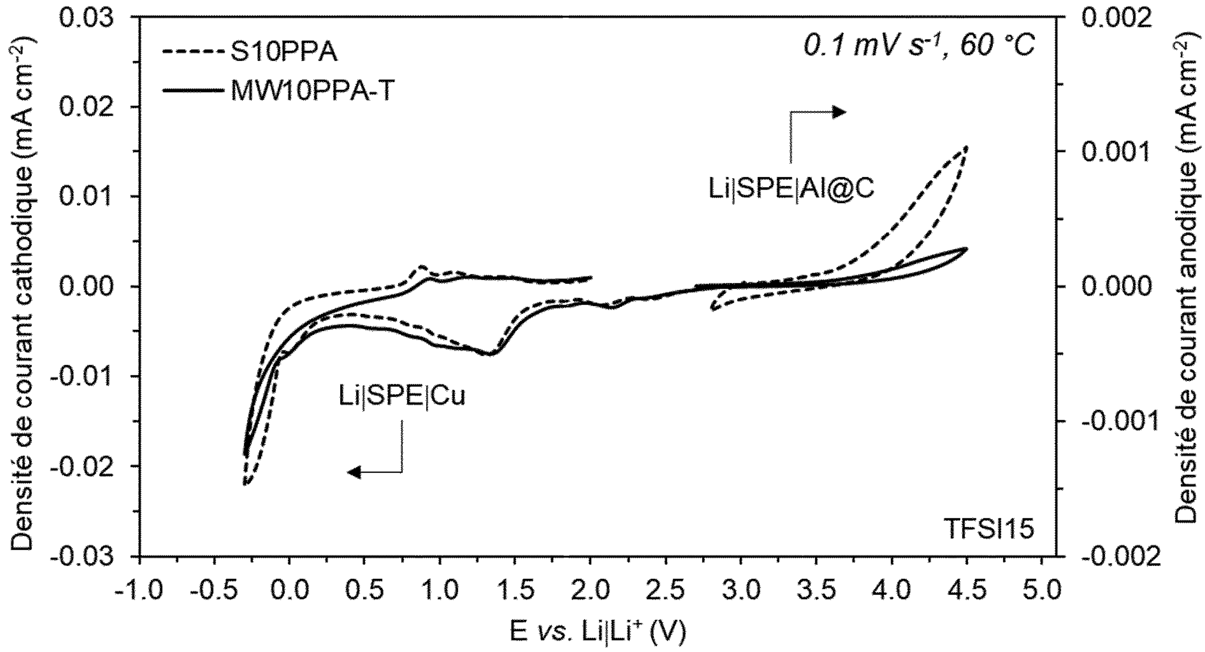
S10PPA
MW10PPA-T
0.1 mV s-1, 60 °C
Li|SPE|Al@C
Li|SPE|Cu
TFSI15
0.03
0.02
0.01
0.00
-0.01
-0.02
-0.03
0.002
0.001
0.000
-0.001
-0.002
Densité de courant cathodique (mA cm-2)
Densité de courant anodique (mA cm-2)
-1.0 -0.5 0.0 0.5 1.0 1.5 2.0 2.5 3.0 3.5 4.0 4.5 5.0
E vs. Li|Li+ (V)

[Fig 7]

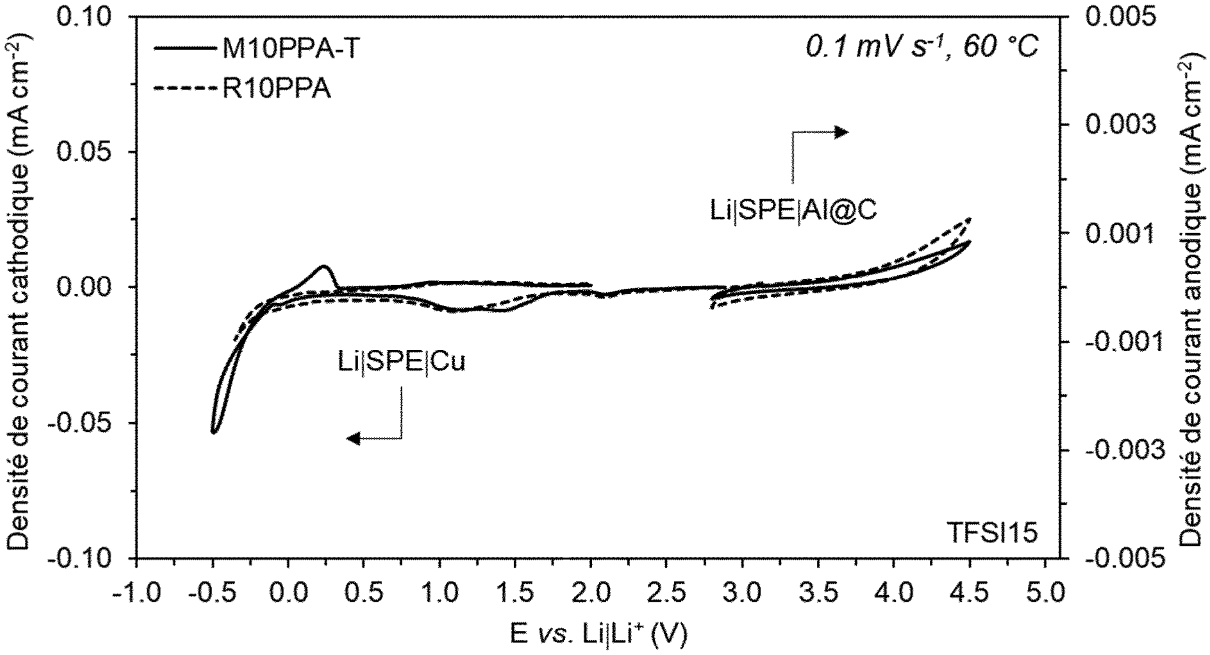
M10PPA-T
R10PPA
0.1 mV s-1, 60 °C
Li|SPE|Al@C
Li|SPE|Cu
TFSI15
Densité de courant cathodique (mA cm-2)
Densité de courant anodique (mA cm-2)
E vs. Li|Li+ (V)
0.10
0.05
0.00
-0.05
-0.10
0.005
0.003
0.001
-0.001
-0.003
-0.005
-1.0 -0.5 0.0 0.5 1.0 1.5 2.0 2.5 3.0 3.5 4.0 4.5 5.0

[Fig 8]

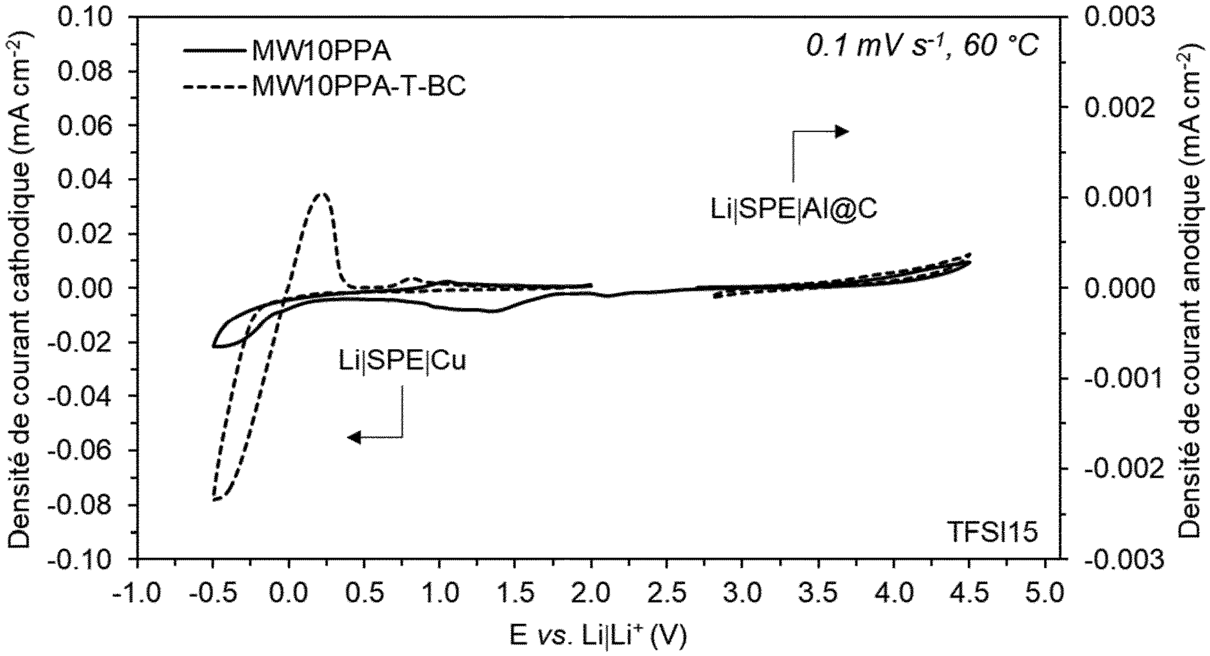
MW10PPA
MW10PPA-T-BC
0.1 mV s-1, 60 °C
Li|SPE|Al@C
Li|SPE|Cu
TFSI15
Densité de courant cathodique (mA cm-2)
Densité de courant anodique (mA cm-2)
E vs. Li|Li+ (V)
0.10
0.08
0.06
0.04
0.02
0.00
-0.02
-0.04
-0.06
-0.08
-0.10
0.003
0.002
0.001
0.000
-0.001
-0.002
-0.003
-1.0 -0.5 0.0 0.5 1.0 1.5 2.0 2.5 3.0 3.5 4.0 4.5 5.0

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **TOMINAGA et al.** *Polymer*, 2010, vol. 51 (19), 4295-4298
- **WANG et al.** *Coor. Chem. Rev.*, 2018, vol. 372, 85-100
- **KIMURA et al.** *Ionics*, 2015, vol. 21 (3), 895-900
- **BRANDELL et al.** *Solid State Ionics*, 2014, vol. 262, 738-742
- **MINDERMARK et al.** *Polymer*, 2015, vol. 63, 91-98
- **MECERREYES et al.** *Electrochimica Acta*, 2017, vol. 237, 259-266
- **LIAO et al.** *Eur. Polym. J*, 2007, vol. 43 (10), 4289-4296
- **LIAO et al.** *React. Funct. Polym*, 2008, vol. 68 (3), 751-758
- **TOMINAGA et al.** *Electrochim. Acta*, 2019, vol. 302, 286-290
- **EVANS**. *Polymer*, 1987, vol. 28 (13), 2324-2328
- **ZHU et al.** *Polym. Degrad. Stabl.*, 2012, vol. 97 (9), 1589-1595